(19) Europäisches Patentamt
European Patent Office
Office européen des brevets

(11) **EP 3 642 696 B1**

(12) **EUROPÄISCHE PATENTSCHRIFT**

(45) Veröffentlichungstag und Bekanntmachung des Hinweises auf die Patenterteilung:
**06.09.2023  Patentblatt 2023/36**

(21) Anmeldenummer: **18734146.6**

(22) Anmeldetag: **18.06.2018**

(51) Internationale Patentklassifikation (IPC):
***G06F 3/01*** *(2006.01)*

(52) Gemeinsame Patentklassifikation (CPC):
**G06F 3/017**

(86) Internationale Anmeldenummer:
**PCT/EP2018/066138**

(87) Internationale Veröffentlichungsnummer:
**WO 2018/234250 (27.12.2018 Gazette 2018/52)**

(54) **VERFAHREN UND VORRICHTUNG ZUM ERFASSEN EINER NUTZEREINGABE ANHAND EINER GESTE**

METHOD AND DEVICE FOR DETECTING A USER INPUT ON THE BASIS OF A GESTURE

PROCÉDÉ ET DISPOSITIF DE DÉTECTION D'UNE ENTRÉE UTILISATEUR EN FONCTION D'UN GESTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2017  DE 102017210316**

(43) Veröffentlichungstag der Anmeldung:
**29.04.2020  Patentblatt 2020/18**

(73) Patentinhaber: **Volkswagen Aktiengesellschaft**
**38440 Wolfsburg (DE)**

(72) Erfinder:
• **ETTE, Bernd**
  **38442 Wolfsburg (DE)**
• **WINTSCHE, Volker**
  **01099 Dresden (DE)**
• **GAIDA, Christian**
  **01705 Freital (DE)**

(74) Vertreter: **Bals & Vogel Patentanwälte PartGmbB**
**Konrad-Zuse-Str. 4**
**44801 Bochum (DE)**

(56) Entgegenhaltungen:
**US-A1- 2012 068 917      US-A1- 2014 168 061**
**US-B1- 8 854 433**

EP 3 642 696 B1

**Beschreibung**

Die vorliegende Erfindung betrifft ein Verfahren und eine Vorrichtung zum Erfassen einer Nutzereingabe anhand einer Geste.

Die Vielzahl elektronischer Einrichtungen, die in weiten Teilen des privaten und beruflichen Lebens eingesetzt werden, macht die Entwicklung von Technologien zu ihrer einfachen Bedienung zu einer vordringlichen Aufgabe. Ein Ansatz dafür ist die Bedienung mittels einer Gestensteuerung, wobei hier weiterhin Herausforderungen bestehen, um eine im Alltag bequem nutzbare Eingabemöglichkeit zu schaffen.

Bei dem in der DE 44 38 643 A1 beschriebenen Verfahren zur Objekterkennung mittels Ultraschall werden Werkstücke lokalisiert und erkannt. Dazu werden unterschiedliche Reflexionsprofile bestimmt, deren Vergleich Aussagen über die Geometrie der Objektoberfläche erlaubt. Der Verlauf der Profile weist ferner Merkmale auf, die zur Klassifikation und Erkennung der Werkstücke herangezogen werden.

Die DE 198 02 261 A1 schlägt ein Verfahren zur Signalverarbeitung von Zeitfolgen digitalisierter Bilder vor, bei dem Objekte erkannt werden und ihre Bewegung analysiert wird. Dazu werden neuronale Netze mit Zeitverzögerung verwendet.

Das in der DE 10 2015 103 022 A1 beschriebene Verfahren zum Erkennen eines bekannten Objekts in einem Sehfeld eines dreidimensionalen Maschinensichtsystems sieht vor, dass anhand einer Bilddatei in zwei Schritten Merkmale bestimmt werden, wobei in den Schritten der relevante Suchraum für den Abgleich mit bekannten Objekten verkleinert und die Suche auf diese Weise erleichtert wird. Insbesondere werden Histogramme verwendet, um eine Verteilung von Farben und Randrichtungen aus der Bilddatei zu extrahieren, ferner werden Formfunktionen ermittelt.

Bei dem in der DE 60 2004 004 048 T2 beschriebenen Verfahren zur Objekterkennung wird ein Bild abgetastet, wobei die Größe eines bei der Abtastung verwendeten Fensters variiert wird, um Objekte verschiedener Größen zu detektieren. Bei der Entscheidung, ob ein Objekt erkannt wird, werden anhand der Fenstergrößen mehrere Schätzungen berechnet und verglichen.

Bei dem in der WO 2012/088702 A1 beschriebenen Verfahren zur Bereitstellung eines Mechanismus zur Gestenerkennung wird eine Folge von Bildern in Blöcke unterteilt und es wird ein Bewegungsstatus für die Blöcke bestimmt. Um die Bewegungsrichtung eines Objekts zu ermitteln, wird die Bewegung von Rändern in einem Histogramm betrachtet, welches anhand des Bewegungsstatus der Blöcke erzeugt wird.

Die WO 2013/085525 A1 schlägt Techniken zur Gestenerkennung vor, bei denen durch eine Stereo-Erfassung die Zahl der zu analysierenden Pixel in erfassten Bildern verringert wird. Dazu wird beispielsweise eine Bildregion bestimmt, in der eine Bewegung eines Objekts erkannt werden soll.

Die US 2014/168061 A1 offenbart ein Verfahren zur Gestenerkennung in einem Fahrzeug, bei dem Fingergruben detektiert und deren Bewegungsbahn mit Gesten verknüpft werden.

Die US 2012/068917 A1 beschreibt die Detektion mehrerer Finger einer Hand zur Gestenerkennung und nutzt die Erkennung der Hautfarbe zur optischen Unterscheidung vom Hintergrund eines Kamerabildes.

Ein limitierender Faktor bei den bekannten Verfahren ist allerdings häufig, dass für eine zuverlässige Erkennung einer erfassten Geste erhebliche Rechenleistung aufgewandt werden muss, die insbesondere in mobilen Geräten, etwa im Bereich der Fahrzeugtechnik, oft nicht zur Verfügung steht.

Der vorliegenden Erfindung liegt daher die Aufgabe zugrunde, ein Verfahren und eine Vorrichtung der eingangs genannten Art bereitzustellen, die eine schnelle, zuverlässige und wenig rechenintensive Erkennung von Gesten ermöglichen. Insbesondere soll die Erfindung es ermöglichen, komplexe Gesten und Bewegungen ressourcenschonend auszuwerten. Erfindungsgemäß wird diese Aufgabe durch ein Verfahren mit den Merkmalen des Anspruchs 1 und eine Vorrichtung mit den Merkmalen des Anspruchs 12 gelöst. Vorteilhafte Ausgestaltungen und Weiterbildungen ergeben sich aus den abhängigen Ansprüchen.

Bei dem erfindungsgemäßen Verfahren zum Erfassen einer Nutzereingabe anhand einer Geste werden Bilddaten mit zumindest zwei Einzelbildern erfasst, wobei den Einzelbildern Aufnahmezeitpunkte zugeordnet sind. Anhand der erfassten Einzelbilder wird jeweils eine Segmentierung durchgeführt, wobei für jedes einzelne Bild jeweils ein Einzelbildobjekt und anhand des Einzelbildobjekts ein Referenzpunkt bestimmt wird. Anhand der Referenzpunkte der Einzelbilder wird eine Trajektorie bestimmt und anhand der Trajektorie wird eine Geste bestimmt. Anhand der bestimmten Geste wird ein Ausgabesignal erzeugt und ausgegeben.

Unter einer "Geste" wird im Sinne der Erfindung eine bestimmte Stellung eines Eingabeobjekts, beispielsweise einer Hand oder eines anderen Körperteils eines Nutzers, oder eine bestimmte Bewegung, die mit dem Eingabeobjekt ausgeführt wird, verstanden. Insbesondere umfasst die Geste eine Kombination statischer und dynamischer Elemente, etwa eine Veränderung der Stellung des Eingabeobjekts während einer Bewegung. Dabei wird insbesondere die Position und/oder Orientierung des Eingabeobjekts im Raum berücksichtigt. Ferner kann vorgesehen sein, dass das Eingabeobjekt mehrere Elemente aufweist, beispielsweise die Finger einer Hand, die in einem bestimmten Maße unabhängig voneinander bewegbar sind, sodass zusätzlich zu der Stellung und/oder Bewegung des Eingabeobjekts auch die Position und Ausrichtung der Elemente des Eingabeobjekts berücksichtigt werden können. Das Eingabeobjekt kann ferner einen Gegenstand umfassen, der beispielsweise durch eine Hand eines Nutzers geführt und im Raum positioniert werden kann, wie beispielsweise ein Stift oder ein anderer Körper.

Die Gesten können nach an sich bekannter Art ausgestaltet sein. Sie umfassen insbesondere Zeigegesten, Wischgesten und solche Gesten, wie sie im alltäglichen Gebrauch verwendet werden, zum Beispiel Handdrehungen, Greif-, Wisch-, Schiebe- oder Zieh-Gesten und Kombinationen mehrerer solcher, gegebenenfalls unmittelbar kurz nacheinander ausgeführter Gesten. Durch die Gestensteuerung wird dem Nutzer daher eine besonders einfache und intuitive Eingabemöglichkeit bereitgestellt.

Die Gesten werden in einem Erfassungsraum ausgeführt, insbesondere ohne dass der Nutzer sich dabei einem bestimmten gegenständlichen Objekt nähern oder eine Berührung herstellen muss. In weiteren Ausführungsbeispielen ist vorgesehen, dass die Geste eine Berührung eines gegenständlichen Objekts umfasst, wobei die Geste insbesondere vollständig während der Berührung, etwa entlang einer berührungsempfindlichen Oberfläche, erfasst wird.

Der Geste kann ferner eine Richtungsinformation zugeordnet werden, die insbesondere anhand einer Richtung einer Bewegung beziehungsweise einer Ausrichtung der Geste bestimmt wird. Eine solche Geste kann analog zur Bedienung eines analogen Bedienelements gebildet sein, beispielsweise analog zum Schieben oder Drehen eines Bedienelements, wobei jedoch keine tatsächliche Verschiebung oder Drehung eines physischen Bedienelements erfolgt, sondern durch die Bewegung des Eingabeobjekts im Erfassungsraum ein solches Bewegungsmuster lediglich nachvollzogen wird. Derartige Gesten kann sich der Nutzer typischerweise besonders leicht merken. Ein solches Verfahren bietet zudem den Vorteil, dass der Nutzer nicht - wie beispielsweise bei einem Schalter oder Drehknopf - einen bestimmten Flächenbereich berühren muss. Es reicht vielmehr aus, dass er das Eingabeobjekt, etwa seine Hand, in den Erfassungsraum bewegt und dort die entsprechende Geste ausführt. Alternativ oder zusätzlich kann bei der Geste eine Richtung durch einen statischen geometrischen Parameter ausgezeichnet sein, beispielsweise indem das Eingabeobjekt eine bestimmte Form annimmt, durch die eine Achse oder Richtung definiert wird.

Die Geste kann ferner in mehrere Phasen unterteilt sein, wobei insbesondere vorgesehen sein kann, dass zumindest eine Phase berührungslos im Erfassungsraum erfasst wird. Die Phasen können so gebildet sein, dass eine Bedienung mit mehreren Schritten implementiert wird. Beispielsweise kann die Geste eine erste Phase umfassen, die als Auswahl einer Funktion interpretiert wird, und zumindest eine weitere Phase, in der eine Einstellung mittels der ausgewählten Funktion vorgenommen wird.

Bei dem Verfahren werden zunächst Bilddaten erfasst, beispielsweise durch ein Kamerasystem. Die Bilddaten umfassen zumindest zwei Einzelbilder, denen jeweils ein Aufnahmezeitpunkt zugeordnet ist. Die Einzelbilder können zeitlich geordnet aufeinanderfolgend erfasst werden, wobei insbesondere eine längere Folge von Einzelbildern in regelmäßigen zeitlichen Abständen erfasst wird. Insbesondere werden die Bilddaten als Videodaten auf an sich bekannte Weise erfasst. Der Erfassungsraum ist dabei insbesondere als der räumliche Bereich definiert, in dem durch das Kamerasystem Bilddaten erfassbar sind, oder als räumlicher Bereich, auf den die Erfassung und/oder die Auswertung der erfassten Bilddaten beschränkt wird.

Die Bilddaten umfassen räumlich aufgelöste Informationen, insbesondere über eine Vielzahl von Bildpunkten, die insbesondere in einer Matrix angeordnet sind. Diese Informationen können verschiedener Art sein, beispielsweise die Intensität oder ein anderes Merkmal einer detektierten elektromagnetischen Strahlung oder Informationen, die mittels Ultraschall erhalten werden. Die Bilddaten können ferner gleichzeitig oder nacheinander für die Bildpunkte erfasst werden, beispielsweise mittels eines Bildsensors mit einer Vielzahl von Bildpunkten oder mittels eines Scanners zur Erfassung der Bildpunkte nacheinander. Die Zuordnung eines Zeitpunktes zu einem Einzelbild erfolgt dabei auf an sich bekannte Weise, wobei auch einem durch einen Scanvorgang erzeugten Bild ein einzelner Zeitpunkt zugeordnet werden kann, obwohl die einzelnen Bildpunkte nicht vollkommen gleichzeitig, sondern nacheinander erfasst wurden.

Ferner kann eine auf eine andere Weise gebildete Gestenerfassungseinrichtung vorgesehen sein, beispielsweise mit einer resistiven und/oder kapazitiven Fläche, über welche zumindest eine erste Phase einer Geste erfasst werden kann. Auch hier können räumlich aufgelöste Daten erfasst und als Bilddaten im Sinne der Erfindung ausgewertet werden.

Bei der Erfassung der Bilddaten kann ferner eine an sich bekannte Signalaufbereitung durchgeführt werden, beispielsweise eine Verbesserung der Bildqualität, Glättung, Filterung, Kalibrierung oder andere Maßnahmen. Ferner können Bildinformationen eingelesen werden, die beispielsweise einen Zeitpunkt betreffen, der einem Einzelbild zugeordnet wird, oder Informationen über einen Nutzer, durch den die Geste ausgeführt wird.

Anhand der erfassten Bilddaten wird für die erfassten Einzelbilder jeweils eine Segmentierung durchgeführt, bei der ein Einzelbildobjekt bestimmt wird. Unter "Segmentierung" wird erfindungsgemäß die Bestimmung zusammengehöriger Bildbereiche verstanden. Insbesondere werden dabei solche Bilddaten berücksichtigt, die dem gleichen Zeitpunkt zugeordnet sind, das heißt den Daten eines bestimmten Einzelbildes. Dieses umfasst insbesondere Bildpunkte (*picture elements,* Pixel), die etwa als Matrix angeordnet sind. Bei der Segmentierung werden dann auf an sich bekannte Weise zusammengehörige Bildpunkte bestimmt, die insbesondere einen zusammenhängenden Bereich innerhalb des Einzelbildes bilden und als ein Einzelbildobjekt betrachtet werden. Beispielsweise repräsentiert ein bei der Segmentierung erkanntes Einzelbildobjekt eine Abbildung eines Eingabeobjekts in einem Einzelbild zu dem zugeordneten Aufnahmezeitpunkt. Das heißt, die Einzelbildobjekte aufeinanderfolgender Einzelbilder können zeitlich nacheinander erfasste Abbildungen des gleichen Eingabeobjekts sein.

Bei der Segmentierung können ferner Bereiche bestimmt werden, die nicht als Einzelbildobjekte erfasst werden sollen, das heißt Bereiche innerhalb der Bilddaten, die keinem Eingabeobjekt zuzuordnen sind und die keinen Beitrag zur Erkennung einer Geste leisten. Dies sind beispielsweise andere Objekte als das Eingabeobjekt selbst. Derartigen Bereichen zugeordnete Bildpunkte können ausgefiltert werden, insbesondere mittels eines mehrstufigen Verfahrens. Dies erfolgt auf an sich bekannte Weise, beispielsweise anhand von oberen und/oder unteren Schwellenwerten für die Fläche oder andere Merkmale des Einzelbildobjekts. Ferner können weitere Elemente der Bilddaten ausgefiltert werden, beispielsweise das Handgelenk und der Arm bei einer mittels einer Hand ausgeführten Geste, wobei insbesondere eine einfache Bilderkennung durchgeführt werden kann.

In einem weiteren Schritt wird anhand des Einzelbildobjekts ein Referenzpunkt bestimmt. Dies kann auf an sich bekannte Weise erfolgen, wobei insbesondere die von dem Einzelbildobjekt eingenommene Fläche und/oder der Verlauf der Umrisslinie berücksichtigt wird.

Bei einer Weiterbildung des erfindungsgemäßen Verfahrens ist der Referenzpunkt der geometrische Schwerpunkt des Einzelbildobjekts, insbesondere der geometrische Flächenschwerpunkt des Einzelbildobjekts. Dies erleichtert vorteilhafterweise die reproduzierbare Bestimmung des Referenzpunkts.

Beispielsweise kann der Flächenschwerpunkt $\vec{s}$ eines Einzelbildobjekts mit m Bildpunkten, die gleich gewichtet sind und denen jeweils ein Vektor $\vec{x_l}$ zugeordnet ist, nach der folgenden Formel berechnet werden:

$$\vec{s} = \frac{1}{m} \sum_{l=1}^{m} \vec{x_l}$$

Der Vektor $\vec{x_l}$ gibt hier insbesondere eine Position des Bildpunktes innerhalb eines zweidimensionalen Rasters eines Einzelbildes an. Wie unten weiter erläutert wird, kann eine Verallgemeinerung für höherdimensionale, insbesondere dreidimensionale, Vektoren erfolgen.

Anhand der für die Einzelbilder bestimmten Referenzpunkte wird eine Veränderung der Position des Referenzpunkts in Abhängigkeit von der Zeit bestimmt. Dies wird als Trajektorie parametrisiert, das heißt, die Position des Referenzpunkts wird als von der Zeit abhängige Größe dargestellt.

Bei einer Ausbildung werden mittels einer Kontinuitätsprüfung zusammengehörige Einzelbildobjekte aufeinanderfolgender Einzelbilder erkannt und die Trajektorie wird anhand der zusammengehörigen Einzelbildobjekte bestimmt. Dadurch kann vorteilhafterweise sichergestellt werden, dass sich die Trajektorie auf zusammengehörige Einzelbildobjekte bezieht, insbesondere mehrere Abbildungen des gleichen Eingabeobjekts, und die Messdaten nicht dadurch verfälscht werden, dass beispielsweise die Bewegungen unterschiedlicher Eingabeobjekte fälschlicherweise als Trajektorie eines einzigen Eingabeobjekts interpretiert werden.

Die Kontinuitätsprüfung kann auf unterschiedliche Weise erfolgen, beispielsweise indem bestimmt wird, wie weit sich der Referenzpunkt für ein Einzelbildobjekt zwischen zwei aufeinanderfolgenden Einzelbildern bewegt hat, wobei sprunghafte Bewegungen als nicht plausibel verworfen werden können. Ferner können Veränderungen der Fläche, die potentiell zusammengehörige Einzelbildobjekte in aufeinanderfolgenden Einzelbildern einnehmen, auf ihre Plausibilität untersucht werden, sodass beispielsweise eine plötzliche oder unstetige Zunahme oder Abnahme der Fläche als Fehldetektion interpretiert werden kann. Analog dazu können Änderungen anhand der Form der Einzelbildobjekte aufeinanderfolgender Einzelbilder auf diese Weise auf Plausibilität geprüft werden, um etwa Einzelbildobjekte, deren Form sich auf unwahrscheinliche Weise verändert, auszuschließen.

Beispielsweise kann bei der Kontinuitätsprüfung ein Schwellenwert festgelegt werden, der eine maximale Geschwindigkeit entlang der Trajektorie definiert, und beim Überschreiten dieser Geschwindigkeit zwischen zwei aufeinanderfolgenden Einzelbildern kann die Trajektorie an einer so bestimmten Stelle unterbrochen werden. Alternativ oder zusätzlich können weitere Schwellenwerte oder anderer Verfahren zur Kontinuitätsprüfung vorgesehen sein.

Die Bestimmung der Geste anhand der Trajektorie kann auf unterschiedliche Weisen erfolgen und insbesondere verschiedene Parameter der Trajektorie, das heißt beispielsweise eine Geschwindigkeit und/oder Richtung des Bewegungsablaufs, sowie zeitliche Ableitungen solcher Parameter, etwa Beschleunigungen und/oder Richtungsänderungen, berücksichtigen. Die Bewegung der Referenzpunkte der Einzelbilder kann ferner mittels eines Filters verarbeitet werden, durch den etwa sehr geringe Bewegungen ausgefiltert werden und die Einzelbildobjekte als statische Objekte behandelt werden können.

Beispielsweise kann die Geste eine Wisch-, Blätter oder Schiebegeste von einer Seite zu einer anderen Seite umfassen. Die Geste kann ferner einen Bewegungspfad beschreiben, entlang dessen eine Bewegung eines bedienbaren Objekts, etwa auf einer grafischen Bedienoberfläche, erzeugt wird.

Bei dem Verfahren wird anhand der bestimmten Geste ein Ausgabesignal erzeugt und ausgegeben. Das Ausgabesignal kann insbesondere Steuerungsdaten für eine Einrichtung umfassen, an welche das Ausgabesignal bei der Ausgabe übertragen wird. Die Ausgabe muss dabei nicht notwendigerweise so erfolgen, dass eine durch einen Menschen erfassbare Information ausgegeben wird, sondern sie kann lediglich an eine Einrichtung erfolgen. Alternativ oder zusätzlich kann eine menschlich wahrnehmbare Ausgabe erfolgen, beispielsweise indem in Abhängigkeit von dem Ausgabesignal eine visuell, optisch und/oder akustisch wahrnehmbare Ausgabe erzeugt und ausgegeben wird, wobei die Ausgabe mittels einer Ausgabeeinheit erfolgt.

Bei einer weiteren Ausbildung werden für die Einzelbildobjekte Ausrichtungen bestimmt und die Geste wird ferner anhand der Ausrichtungen der Einzelbildobjekte bestimmt. Insbesondere werden die Ausrichtungen als Parameter in Abhängigkeit von der Zeit bestimmt und zur Bestimmung der Geste berücksichtigt. Dadurch können vorteilhafterweise komplexe Gesten erfasst werden, die beispielsweise eine Rotation des Eingabeobjekts umfassen.

Vorliegende Informationen über die Ausrichtungen können alternativ oder zusätzlich genutzt werden, um eine Korrektur der Daten vorzunehmen, etwa um Gesten ohne eventuelle Störungen durch unterschiedliche Ausrichtungen der Einzelbildobjekte zu erkennen. Dadurch kann vorteilhafterweise eine Korrektur einer Rotation des Einzelbildobjekts ausgeführt und die Erkennung einer Geste unabhängig von einer bestimmten Ausrichtung erleichtert werden. Dazu werden für die Einzelbildobjekte anhand der Ausrichtungen Neigungswinkel bestimmt und anhand der Neigungswinkel kann eine Ausgleichstransformation für die Einzelbildobjekte der Einzelbilder ausgeführt werden. Dadurch können Gesten unabhängig von dem Neigungswinkel erfasst werden. Wenn das Eingabeobjekt beispielsweise eine Hand eines Nutzers ist, kann der Neigungswinkel insbesondere anhand der Position eines Handgelenks relativ zu den übrigen Bereichen des detektierten Einzelbildobjekts bestimmt werden.

Bei einer Ausbildung umfassen die Bilddaten Bildpunkte und den Bildpunkten sind Distanzinformationen zugeordnet. Dadurch kann das Eingabeobjekt innerhalb der Bilddaten besonders sicher erkannt werden und es können zusätzliche Informationen genutzt werden, um Gesten besonders differenziert zu erkennen.

Insbesondere kann vorgesehen sein, dass die Bilddaten mittels einer *Time-of-Flight-Kamera* (ToF-Kamera) erfasst werden. Dabei wird ein Lichtimpuls, typischerweise im Infrarotbereich, ausgesendet und das von Objekten innerhalb eines Erfassungsraums reflektierte Licht wird detektiert. Die Lichtquelle und der Detektor sind dabei typischerweise dicht beieinander angeordnet. Es wird ein Zeitversatz zwischen dem Senden und Empfangen des Lichtimpulses sowie daraus folgend die Distanz des Objekts relativ zur Kamera bestimmt. Auf diese Weise können für jeden Bildpunkt Distanzinformationen erfasst werden.

Dies erlaubt ferner eine Filterung der erfassten Bilddaten anhand der Distanzinformationen, beispielsweise um nur Bilddaten innerhalb einer bestimmten Entfernung zu berücksichtigen und etwa einen detektierten Hintergrund zu verwerfen. Dadurch kann der Erfassungsraum, in dem die Geste erfasst wird, genau vorgegeben werden, wobei dieser insbesondere dynamisch bestimmt wird, beispielsweise nachdem in einem ersten Schritt eine Schätzung des Abstands des Eingabeobjekts zu dem Sensor erfolgt ist. Bildpunkte mit Distanzinformationen, die auf eine Reflexion durch ein Objekt außerhalb des definierten Erfassungsraums hinweisen, können auf diese Weise ausgefiltert werden. Verglichen mit anderen Systemen können zudem auch Objekte mit geringer Reflektivität sicher erkannt werden, da die Empfindlichkeit typischer ToF-Systeme zum Detektieren einer schwachen Reflexion ausreicht.

In weiteren Ausführungsbeispielen können die Bilddaten mit Distanzinformationen mittels anderer Verfahren erfasst werden, beispielsweise mittels Ultraschall oder einer Stereokamera.

Ferner können die Referenzpunkte für die Einzelbildobjekte auch anhand der Distanzinformationen bestimmt werden. Hierdurch können beispielsweise dreidimensionale Positionen der Referenzpunkte bestimmt werden, nämlich anhand der Positionsdaten innerhalb eines zweidimensionalen Einzelbildes sowie der dazugehörigen Distanzinformationen. Beispielsweise kann die oben erläuterte Formel zur Berechnung des Flächenschwerpunkts verwendet werden, wobei die den Bildpunkten zugeordneten Vektoren jeweils dreidimensionale Positionen repräsentieren. Dies erlaubt es vorteilhafterweise, anhand der Referenzpunkte mehrerer zeitlich aufeinanderfolgender Einzelbilder eine dreidimensionale Trajektorie eines Eingabeobjekts relativ zu einem Sensor zu bestimmen. Auf diese Weise können etwa Schiebe- und Zieh-Gesten auf den Sensor zu beziehungsweise von diesem weg erfasst werden.

Erfindungsgemäß wird für jedes Einzelbild jeweils eine Umrisslinie des Einzelbildobjekts bestimmt und für eine Vielzahl von Punkten auf der Umrisslinie des Einzelbildobjekts wird jeweils ein Abstand zu dem Referenzpunkt des Einzelbildobjekts bestimmt. Dabei wird für jedes Einzelbildobjekt anhand der Abstände ein gemessenes Abstandsprofil erzeugt und die Geste wird ferner anhand des gemessenen Abstandsprofils bestimmt. Dies erlaubt vorteilhafterweise eine besonders einfache Parametrisierung der Einzelbildobjekte und eine reproduzierbare Erkennung der Geste.

Die Umrisslinie eines Einzelbildobjekts kann auf an sich bekannte Weise bestimmt werden, wobei insbesondere der Verlauf der äußersten Bildpunkte bestimmt wird. Die Erkennung der Geste erfolgt dabei vorteilhafterweise anhand eines gemessenen Abstandsprofils, das anhand besonders einfacher Merkmale charakterisiert werden kann. Dies führt dazu, dass das Verfahren besonders schnell und ressourcenschonend auch mit wenig Rechenleistung ausgeführt werden kann. Zudem können Bilddaten mit einer besonders niedrigen Auflösung zur Gestenerkennung verwendet werden.

Ausgehend von dem Referenzpunkt wird ein Abstandsprofil erzeugt, das den Abstand der Umrisslinie des Einzelbildobjekts zu dem Referenzpunkt umfasst. Dazu kann beispielsweise ein Zeiger definiert werden, der ausgehend von dem Referenzpunkt zu einem Punkt auf der Umrisslinie reicht, und es kann die Länge des Zeigers bestimmt werden. Um das Abstandsprofil zu erzeugen kann dieser Zeiger für eine Vielzahl von Punkten entlang der Umrisslinie erzeugt und gemessen werden, wobei das Abstandsprofil insbesondere eine Parametrisierung der Umrisslinie in Polarkoordinaten ausgehend von dem Referenzpunkt umfasst, das heißt, das Abstandsprofil gibt die Entfernung eines Punktes auf der Umrisslinie von dem Referenzpunkt in Abhängigkeit von einem Winkel des Zeigers an. Das Abstandsprofil wird insbesondere so erzeugt, dass der Winkel des Zeigers auf eine bestimmte Weise definiert ist, beispielsweise indem ein senkrecht nach oben weisender Zeiger einen Winkel von 0° einnimmt, während ein senkrecht nach unten weisender Zeiger einen Winkel von 180° einnimmt. Zur Bestimmung des Abstandsprofils kann der Winkel des Zeigers beispielweise die Winkel von 0° bis 360° im Uhrzeigersinn durchlaufen.

Bei weiteren Ausführungsformen kann eine andere Erzeugung des Abstandsprofils vorgesehen sein, insbesondere mittels einer andersgearteten Parametrisierung der Umrisslinie des Einzelbildobjekts. Zum Beispiel können die Punkte auf der Umrisslinie äquidistant entlang der Umrisslinie angeordnet sein.

Ferner kann vorgesehen sein, dass eine Glättung und oder Filterung der Daten des Abstandsprofils durchgeführt wird, beispielsweise durch einen gleitenden Durchschnitt oder eine andere Filterung zur Unterdrückung von hochfrequenten Schwankungen und/oder Rauschen.

Bei einer Ausbildung der Erfindung wird für die Einzelbildobjekte jeweils eine Fläche bestimmt und das entsprechende gemessene Abstandsprofil wird anhand der bestimmten Fläche normiert. Dadurch kann die Erkennung von Gesten vorteilhafterweise unabhängig von der tatsächlichen Größe des Einzelbildobjekts erfolgen, beispielsweise unabhängig von der Größe der Hand, mit welcher die Geste durchgeführt wird.

Zur Normierung kann beispielsweise ein Flächenkreis bestimmt werden, dessen Mittelpunkt mit dem Referenzpunkt zusammenfällt und dessen Radius r so bestimmt wird, dass die Fläche $A_{Kreis}$ des Flächenkreises mit der Fläche $A_{Obj}$ des Einzelbildobjekts in dem Einzelbild übereinstimmt:

$$A_{Kreis} = \pi * r^2 = A_{Obj}; \quad r = \sqrt{\frac{A_{Obj}}{\pi}}$$

Der Abstand eines Punktes auf der Umrisslinie des Einzelbildobjekts zu dem Referenzpunkt kann in diesem Fall relativ zu dem Radius r angegeben werden, etwa durch eine Multiplikation mit dem Normierungsfaktor $\frac{1}{r}$. In diesem Fall weisen Werte oberhalb von 1 darauf hin, dass die Umrisslinie an einer Position weiter von dem Referenzpunkt entfernt ist als der Radius des Flächenkreises, während umgekehrt Werte unterhalb von 1 darauf hinweisen, dass die Umrisslinie innerhalb des Flächenkreises verläuft.

Die Normierung wird insbesondere alle Einzelbildobjekte separat ausgeführt, sodass die weitere Analyse der erfassten Gesten anhand numerischer Daten erfolgt. Der auf diese Weise bestimmte Normierungsfaktor kann ferner bei der Bestimmung der Geste berücksichtigt werden. Beispielsweise kann hierzu eine Veränderung der Größe des Einzelbildobjekts in Abhängigkeit von der Zeit berücksichtigt werden.

Die Geste kann anhand eines einzelnen gemessenen Abstandsprofils oder anhand einer Abfolge verschiedener Abstandsprofile, insbesondere für mehrere Einzelbildobjekte, auf unterschiedliche Weisen bestimmt werden. Das heißt, eine Geste kann aus mehreren Teilgesten zusammengesetzt sein oder eine bestimmte Abfolge von Teilgesten kann als eine einzelne Geste interpretiert werden.

Bei einer weiteren Ausbildung werden geometrische Profilmerkmale der gemessenen Abstandsprofile bestimmt und die Geste wird anhand der geometrischen Profilmerkmale bestimmt. Dies erlaubt vorteilhafterweise eine besonders einfache, geometrische Extraktion wesentlicher Merkmale des Abstandsprofils.

Geometrische Profilmerkmale können beispielsweise die Anzahl und Lage von Extremwerten und/oder Wendepunkten der Abstandsprofile sein. Die Bestimmung der Profilmerkmale erfolgt insbesondere nach Art einer an sich bekannten Kurvendiskussion, bei welcher charakteristische Merkmale einer mathematischen Kurve bestimmt werden. Alternativ oder zusätzlich werden analog dazu die Daten über die Trajektorie verarbeitet, etwa durch eine Analyse der Trajektorie mittels Kurvendiskussion.

Die Zuordnung der bestimmten geometrischen Profilmerkmale zu einer Geste kann auf unterschiedliche Weisen erfolgen. Beispielsweise kann bei einer Ausführungsform vorgesehen sein, dass die Anzahl der Maxima des Abstandsprofils einer Geste zugeordnet wird, beispielsweise wenn eine Geste durch eine bestimmte Zahl gestreckter Finger charakterisiert ist und die Anzahl der Maxima ebendieser Anzahl entspricht. Alternativ oder zusätzlich können beispielsweise Abstände zwischen zwei Extrema zur Zuordnung einer Geste verwendet werden, beispielsweise um zu erkennen, ob zwei nebeneinander angeordnete Finger einer Hand gestreckt sind, oder die Ableitung des Abstandsprofils kann verwendet werden, um weitere charakteristische Profilmerkmale zu bestimmen. Da diese Profilmerkmale für die Vielzahl der Einzelbilder der Bildfolge vorliegen, können auch Änderungen der Profilmerkmale und insbesondere die Geschwindigkeit dieser Änderungen bei der Bestimmung der Geste berücksichtigt werden.

Erfindungsgemäß wird die Geste anhand eines Profilvergleichs bestimmt, bei dem die gemessenen Abstandsprofile mit einer Vielzahl von Referenz-Abstandsprofilen verglichen werden, wobei den Referenz-Abstandsprofilen jeweils eine Geste zugeordnet ist. Dadurch können vorteilhafterweise bestimmte Gesten für die Erkennung vorgegeben und auch komplexe Gesten erkannt werden.

Die Referenz-Abstandsprofile können beispielsweise durch einen Hersteller bei der Auslieferung einer Vorrichtung zur Ausführung des erfindungsgemäßen Verfahrens vorgegeben oder zu einem späteren Zeitpunkt bereitgestellt werden. Alternativ oder zusätzlich können Eingabemöglichkeiten vorgesehen sein, um beispielsweise neue Referenz-Abstandsprofile von einem Nutzer zu erfassen und zu speichern, etwa um eine neue Geste zu erlernen oder die Erkennung einer bereits bekannten Geste zu verbessern.

Alternativ oder zusätzlich kann ein Vergleich der bestimmten Trajektorie mit Referenz-Trajektorien erfolgen und die Bestimmung der Geste kann analog zu den für Referenz-Abstandsprofile beschriebenen Verfahren erfolgen Bei einer Ausbildung werden für die Referenz-Abstandsprofile geometrische Referenzmerkmale bestimmt und der Profilvergleich wird anhand der Referenzmerkmale und der Profilmerkmale der gemessenen Abstandsprofile durchgeführt. Dadurch kann vorteilhafterweise die Komplexität des Profilvergleichs weiter vermindert werden.

Die Referenz-Abstandsprofile können auf unterschiedliche Weisen bereitgestellt werden. Beispielsweise kann das gemessene Abstandsprofil eine bestimmte Auflösung, das heißt insbesondere eine bestimmte Anzahl von Punkten des Abstandsprofils, aufweisen. Die Referenz-Abstandsprofile können mit der gleichen oder einer anderen Auflösung bereitgestellt werden; alternativ oder zusätzlich können sie Referenzmerkmale umfassen, die insbesondere nach Art der oben beschriebenen für das gemessene Abstandsprofilen bestimmten Profilmerkmale bestimmt werden. Indem die Referenzmerkmale direkt bereitgestellt werden, muss für den Profilvergleich keine neue Analyse der Referenz-Abstandsprofile erfolgen.

Der Profilvergleich kann entsprechend so erfolgen, dass die bereitgestellten Daten der Referenz-Abstandsprofile und die gemessenen Abstandsprofile besonders effizient und ohne unnötig großen Rechenaufwand genutzt werden können.

Bei einer weiteren Ausbildung werden zumindest zwei Extremwerte der gemessenen Abstandsprofile bestimmt und der Profilvergleich erfolgt anhand der bestimmten Extremwerte der gemessenen Abstandsprofile. Dadurch kann der Profilvergleich vorteilhafterweise besonders einfach und mit entsprechend geringer Rechenleistung erfolgen.

Beispielsweise können bei dem Profilvergleich die Anzahl, Lage und/oder Amplitude der Extremwerte berücksichtigt werden. Diese Parameter sind besonders einfach bestimmbar und charakterisieren das gemessene Abstandsprofil sowie die Referenz-Abstandsprofile. Der Profilvergleich kann daher besonders einfach durchgeführt werden. Insbesondere können die für den Profilvergleich benötigten Daten, beispielsweise über die Extremwerte, für die Referenz-Abstandsprofile bereits vorverarbeitet und gespeichert sein, sodass keine erneute Analyse der Referenz-Abstandsprofile notwendig ist.

Analog dazu kann die Trajektorie verarbeitet und durch Analyse von Extremwerten des Positionsverlaufs, Geschwindigkeitsentwicklung oder der Beschleunigung einer Geste zugeordnet werden.

Erfindungsgemäß wird eine erste Ableitung der Abstandsprofile bestimmt und der Profilvergleich erfolgt anhand der bestimmten Ableitung. Dabei kann ferner eine zweite Ableitung bestimmt werden. Dadurch können vorteilhafterweise zusätzliche relevante Parameter des Abstandsprofils ermittelt und die Zuordnung zur einem Referenzprofil erleichtert werden. Insbesondere können geometrische Profilmerkmale anhand der ersten und/oder zweiten Ableitung bestimmt werden, etwa die Anzahl und Lage von Extremwerten und/oder Wendepunkte des Abstandsprofils. Analog dazu kann eine Analyse der Trajektorie insbesondere durch einen Vergleich mit Referenz-Trajektorien durchgeführt werden.

Bei einer Ausbildung wird der Profilvergleich anhand eines Maschinenlernverfahrens, beispielsweise anhand eines neuronalen Netzes, durchgeführt. Dadurch kann der Vergleich vorteilhafterweise besonders genau durchgeführt werden. Insbesondere kann die Klassifikation und die Erkennung einer Geste anhand der Trajektorie, des Abstandsprofils und des Profilvergleichs mittels Trainingsdaten verbessert werden.

Ferner kann vorgesehen sein, dass anhand der bestimmten Abstandsprofile und/oder der Trajektorie eine neue Geste gelernt wird. Dies kann auf unterschiedliche, an sich bekannte Weisen erfolgen, beispielsweise indem anhand der Abstandsprofile der erfassten Bilddaten oder anhand einer Vielzahl getrennt voneinander erfasster Bilddaten ein neues Referenzprofil erzeugt wird, welches einer bestimmten Geste zugeordnet ist und deren Erkennung erlaubt oder verbessert. Analog dazu kann eine neue Referenz-Trajektorie erzeugt werden. Ferner kann ein Maschinenlernverfahren verwendet werden, etwa um mittels eines neuronalen Netzes eine neue Geste zu erlernen.

Bei einer Ausgestaltung des erfindungsgemäßen Verfahrens umfassen die erfassten Bilddaten ein zumindest teilweises Abbild einer Hand. Insbesondere wird die Geste anhand einer Anzahl von gestreckten Fingern der Hand bestimmt. Die Geste kann dadurch vorteilhafterweise mittels der Hand des Nutzers ausgeführt werden, sodass kein zusätzliches Eingabeobjekt verwendet werden muss. Die Geste ist ferner besonders einfach für den Nutzer durchführbar.

Alternativ oder zusätzlich zur Berücksichtigung der Anzahl der gestreckten Finger können Gesten vorgesehen sein, bei denen ein bestimmter Finger, beispielsweise der Zeigefinger, oder mehrere Finger in Kombination gestreckt sind, beispielsweise gleichzeitig der Daumen und Zeigefinger oder der Zeige- und Mittelfinger einer Hand. In weiteren Ausführungsbeispielen können statt einer Hand und deren Fingern andere Eingabeobjekte verwendet werden.

Bei einer Weiterbildung umfasst die Geste eine Bewegung der Hand, beispielsweise eine Veränderung der Lage der gesamten Hand oder einzelner Finger, ein Strecken oder Beugen von Fingern, eine Rotation und/oder eine Positionsänderung der Hand oder einzelner Finger. Insbesondere kann dabei die Stellung einzelner Finger relativ zueinander und zur Hand berücksichtigt werden. Auf diese Weise kann vorteilhafterweise zum Beispiel ein Zoom, eine Verschiebung, eine Markierung und/oder eine Auswahl mittels einer Geste implementiert werden. Ferner können mehrere nacheinander ausgeführte Gesten mittels der erfassten Bilderfolge erkannt werden.

Bei einer Ausbildung wird bei der Bestimmung der Geste geprüft, ob zumindest ein Einzelbildobjekt der Einzelbilder als Hand erkannt wird. Dadurch kann vorteilhafterweise sichergestellt werden, dass eine mit der Hand durchgeführte Geste erfasst wird, sodass Fehldetektionen vermieden werden können.

Über den Verlauf der Trajektorie hinweg werden die Einzelbildobjekte analysiert und können auf Merkmale einer Hand geprüft werden. Beispielsweise kann die Form eines Einzelbildobjekts bestimmt und überprüft werden, ob beispielsweise Finger erkennbar sind. Dies ist beispielsweise nicht der Fall, wenn ein bestimmter Teil des Arms detektiert wird. Ist die Hand nicht über den gesamten Verlauf der Trajektorie erkennbar, so kann die Erkennung einer Geste davon abhängig gemacht werden, ob die Hand zu einem bestimmten Zeitpunkt und/oder an einer Position innerhalb der Trajektorie erkannt wurde.

Bei einer weiteren Ausbildung umfasst die Geste eine Drehung einer Hand. Derartige Gesten sind vorteilhafterweise besonders einfach ausführbar und können ohne Hilfsmittel verwendet werden.

Bei der Erfassung der Geste können die erfassten Bilddaten beispielsweise im Wesentlichen ein Abbild der Handfläche oder des Handrückens umfassen, gegebenenfalls mit Fingern der Hand. Zudem kann vorgesehen sein, dass eine seitliche Ansicht der Hand erkannt wird, beispielsweise nach einer Drehung der Hand so, dass eine Handkante auf den Sensor gerichtet ist. Beispielsweise kann eine solche Lage der Hand anhand eines länglichen Einzelbildobjekts erkannt werden. Ferner kann eine Veränderung der Lage der Hand erkannt werden, indem eine Veränderung anhand zumindest einer Eigenschaft des erkannten Einzelbildobjekts identifiziert wird, etwa einer Exzentrizität, einer Rundheit, einer Amplitude oder von Wiederholungen innerhalb eines Abstandsprofils.

Die erfindungsgemäße Vorrichtung der eingangs genannten Art umfasst eine Erfassungseinheit, durch die Bilddaten mit zumindest zwei Einzelbildern erfassbar sind, wobei den Einzelbildern Aufnahmezeitpunkte zuordenbar sind. Sie umfasst ferner eine Segmentierungseinheit, durch die anhand der erfassten Einzelbilder jeweils eine Segmentierung durchführbar ist, wobei für jedes Einzelbild jeweils ein Einzelbildobjekt und anhand des Einzelbildobjekts ein Referenzpunkt bestimmbar ist. Sie umfasst zudem eine Trajektorienberechnungseinheit, durch die anhand der Referenzpunkte der Einzelbilder eine Trajektorie bestimmbar ist, sowie eine Zuordnungseinheit, durch die anhand der Trajektorie eine Geste bestimmbar ist, und eine Ausgabeeinheit, durch die anhand der bestimmten Geste ein Ausgabesignal erzeugbar und ausgebbar ist.

Die erfindungsgemäße Vorrichtung ist insbesondere ausgebildet, das vorstehend beschriebene erfindungsgemäße Verfahren zu implementieren. Die Vorrichtung weist somit dieselben Vorteile auf wie das erfindungsgemäße Verfahren.

Die Ausgabeeinheit umfasst insbesondere eine Schnittstelle mittels derer das Ausgabesignal an eine andere Einrichtung übertragbar ist, wobei nicht zwangsläufig eine für den menschlichen Nutzer wahrnehmbare Ausgabe erzeugt wird. Die Ausgabe kann beispielsweise auf an sich bekannte Weise an eine weitere Einrichtung übertragen werden, sodass für diese Einrichtung eine Gestensteuerung implementiert wird.

Bei einer Ausgestaltung der erfindungsgemäßen Vorrichtung ist für jedes Einzelbild jeweils eine Umrisslinie des Einzelbildobjekts bestimmbar und durch eine Profilberechnungseinheit ist für eine Vielzahl von Punkten auf der Umrisslinie des Einzelbildobjekts jeweils ein Abstand zu dem Referenzpunkt des Einzelbildobjekts bestimmbar, wobei für jedes Einzelbildobjekt anhand der Abstände ein gemessenes Abstandsprofil erzeugbar ist. Die Geste ist hier anhand des gemessenen Abstandsprofils bestimmbar.

Die Vorrichtung ist insbesondere in einem Fahrzeug angeordnet und/oder von dem Fahrzeug umfasst.

Die Erfindung wird nun anhand von Ausführungsbeispielen mit Bezug zu den Zeichnungen erläutert.

| | |
|---|---|
| Figur 1 | zeigt ein Fahrzeug mit einem Ausführungsbeispiel der erfindungsgemäßen Vorrichtung, |
| Figuren 2A bis 2C | zeigen ein Ausführungsbeispiel des erfindungsgemäßen Verfahrens und |
| Figuren 3A bis 8B | zeigen Ausführungsbeispiele von Einzelbildobjekten und dazugehörigen Abstandsprofilen, wie sie bei dem erfindungsgemäßen Verfahren auftreten können. |

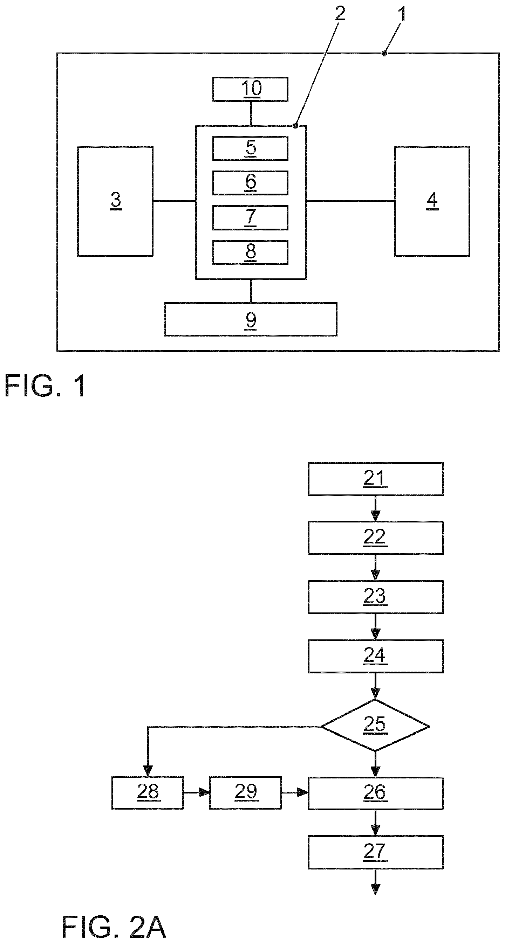

Mit Bezug zu Figur 1 wird ein Fahrzeug mit einem Ausführungsbeispiel der erfindungsgemäßen Vorrichtung erläutert.

Ein Fahrzeug 1 umfasst eine Erfassungseinheit 4, die mit einer Steuereinheit 2 gekoppelt ist. Es umfasst ferner eine Einrichtung 3, im dargestellten Ausführungsbeispiel ein Radio 3, und eine Speichereinheit 9, die beide ebenfalls mit der Steuereinheit 2 gekoppelt sind. Dabei umfasst die Steuereinheit 2 eine Segmentierungseinheit 5, eine Profilberechnungseinheit 6, eine Zuordnungseinheit 7 und eine Ausgabeeinheit 8. Mit der Steuereinheit 2 ist ferner eine Trajektorienberechnungseinheit 10 gekoppelt.

Die Erfassungseinheit 4 umfasst bei dem Ausführungsbeispiel eine *Time-of-Flight-Kamera* 4, die auf an sich bekannte Weise ausgebildet ist. Insbesondere werden Lichtimpulse im Infrarotbereich ausgesendet und an Objekten reflektiert. Solches von Objekten in einem Erfassungsbereich reflektiertes Licht wird detektiert und für eine Matrix von Bildpunkten der *Time-of-Flight-Kamera* 4 wird bestimmt, welcher zeitliche Versatz zwischen dem Aussenden des Lichtimpulses und der Detektion des reflektierten Lichts auftritt. Anhand des zeitlichen Versatzes und der Lichtgeschwindigkeit wird der Laufweg des Lichts und der Abstand des reflektierenden Objekts berechnet. Anhand der bei der Detektion erzeugten Daten können Bilddaten erzeugt werden, wobei jedem Bildpunkt eine Distanzinformation zugeordnet ist, beispielsweise ein Wert für den Abstand eines reflektierenden Objekts. Ferner können Daten über eine detektierte Intensität, eine Streuung oder andere Parameter erfasst werden.

In weiteren Ausführungsbeispielen kann die Erfassungseinheit 4 alternativ oder zusätzlich andere Sensoren oder Detektortypen umfassen, beispielsweise eine Stereokamera, ein Ultraschallsystem, ein Laserscanner oder eine andere Einheit mit ähnlicher Funktionsweise, die insbesondere die Bestimmung von Distanzinformationen für die Bilddaten ermöglichen. Ferner kann eine Erfassungseinheit 4 vorgesehen sein, bei welcher die Bilddaten ohne Distanzinformationen bestimmt werden, beispielsweise anhand einer einfachen Kamera.

Bei dem Ausführungsbeispiel ist ferner vorgesehen, dass durch die Erfassungseinheit 4 eine Folge von Einzelbildern erfasst wird. Die erfassten Bilddaten umfassen dabei Videodaten. In einem anderen Ausführungsbeispiel kann jedoch auch vorgesehen sein, dass auf andere Weise eine zeitlich geordnete Folge von Einzelbildern erfasst wird.

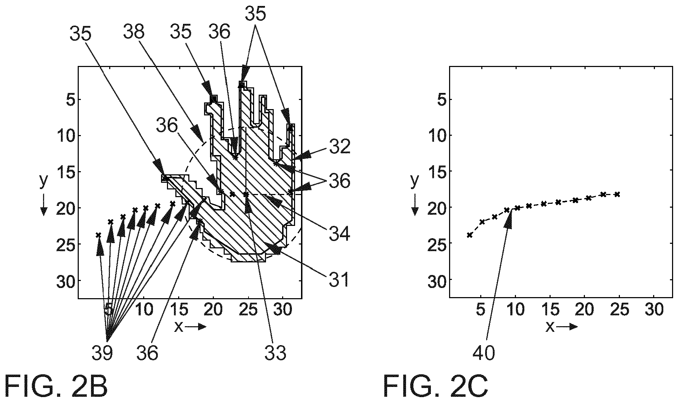

Mit Bezug zu den Figuren 2A, 2B und 2C wird ein Ausführungsbeispiel des erfindungsgemäßen Verfahrens erläutert. Dabei wird von dem oben mit Bezug zu Figur 1 erläuterten Ausführungsbeispiel der erfindungsgemäßen Vorrichtung ausgegangen.

In einem ersten Schritt 21 werden durch die Erfassungseinheit 4 Bilddaten erfasst. Die Bilddaten umfassen bei dem Ausführungsbeispiel Bildpunkte von Einzelbildern, die jeweils einem Zeitpunkt zugeordnet sind. Eine Folge zeitlich geordneter Einzelbilder wird insbesondere in Form von Videodaten erfasst. Den Bildpunkten sind ferner durch die ToF-Kamera 4 erfasste Distanzinformationen zugeordnet.

Die Bilddaten werden an die Steuereinheit 2 übertragen und dort weiterverarbeitet. In einem zweiten Schritt 22 erfolgt die Signalaufbereitung nach an sich bekannter Weise, wobei etwa Einzelbilder innerhalb der Bilddaten erkannt werden können, etwa für den Fall einer Videosequenz. Ferner können neben den eigentlichen Bilddaten auch Metadaten eingelesen werden, etwa Bildinformationen über einen dem Einzelbild zugeordneten Aufnahmezeitpunkt, andere Zeitdaten oder weitere Informationen. Ferner kann eine Filterung und/oder eine Kalibration durchgeführt werden.

In einem weiteren Schritt 23 wird durch die Segmentierungseinheit 5 der Vorrichtung auf an sich bekannte Weise eine Segmentierung für die erfassten Einzelbilder durchgeführt. Eine schematische Darstellung eines beispielhaften Ergebnisses zeigt Figur 2B: Es wird ein Einzelbildobjekt 31, hier eine Hand 31, als zusammengehöriger Bereich erkannt und eine Umrisslinie 32 der Hand 31 wird bestimmt. Das Einzelbildobjekt 31 wird insbesondere anhand inhaltlich zusammengehöriger, zusammenhängender Bildpunkte bestimmt. Bei der Segmentierung werden nicht zu detektierende Bereiche, etwa von der Reflexion weiterer Objekte im Detektionsbereich, beziehungsweise Bildpunkte identifiziert und entfernt, wobei ein mehrstufiges Verfahren verwendet werden kann.

Bei dem Ausführungsbeispiel ist vorgesehen, dass eine mittels der Hand 31 durchgeführte Geste erkannt wird. Hierzu wird die Segmentierung im Schritt 23 für jedes Einzelbild durchgeführt. Zunächst werden das an die Hand 31 anschließende Handgelenk und der Arm identifiziert und aus dem Bild entfernt, da diese Bereiche nicht zur Gestenerkennung herangezogen werden sollen. Ferner kann vorgesehen sein, dass ein Neigungswinkel der Hand 31 bestimmt und ausgeglichen wird, wobei beispielsweise die Positionen des ausgefilterten Handgelenks relativ zum Rest der Hand verwendet werden kann. Die anschließend bestimmte Umrisslinie 32 ist beispielsweise definiert als Verlauf des äußersten Randes der Hand 31 oder als eine Linie durch die Mittelpunkte der am Rand der Hand 31 angeordneten Bildpunkte.

In weiteren Ausführungsbeispielen kann alternativ oder zusätzlich eine anhand eines anderen Eingabeobjekts 31 durchgeführte Geste erfasst und erkannt werden. Der Segmentierungsschritt 23 wird dann auf eine entsprechend angepasste Weise durchgeführt.

Bei weiteren Ausführungsbeispielen können bei der Signalaufbereitung 22 und/oder der Segmentierung 23 weitere an sich bekannte Verfahren zur Bildverarbeitung eingesetzt werden, etwa zur Erkennung eines bestimmten Eingabeobjekts, insbesondere der Hand 31, und zur Unterscheidung von Objekten, etwa im Hintergrund eines Einzelbildes, die nicht erkannt werden sollen.

In einem weiteren Schritt 24 wird eine Extraktion von Merkmalen anhand des bei der Segmentierung bestimmten Einzelbildobjekts 31 durchgeführt. Dazu wird bei dem Ausführungsbeispiel ein Flächenkreis 38 bestimmt, wobei zunächst der geometrische Schwerpunkt 33 der Fläche des erkannten Einzelbildobjekts 31 als Mittelpunkt 33 des Flächenkreises 38 bestimmt wird. Um den Flächenkreis 38 zu parametrisieren wird ferner ein Radius 34 so bestimmt, dass die Fläche des Flächenkreises 38 gleich der Fläche des bestimmten Einzelbildobjekts 31 ist.

Der Mittelpunkt 33 des Flächenkreises 38 kann zweidimensional anhand von Pixelpositionen bestimmt werden, die den einzelnen Bildpunkten des Einzelbildes zugeordnet sind. Bei dem Ausführungsbeispiel ist ferner vorgesehen, dass die Bildpunkte der durch die ToF-Kamera 4 erfassten Bilddaten der Einzelbilder dreidimensionale Positionsinformationen umfassen, insbesondere die Position der Pixel innerhalb einer zweidimensionalen Matrix sowie Abstandsinformationen für die einzelnen Pixel. Der Mittelpunkt 33 des Flächenkreises 38 kann dann auch dreidimensional bestimmt werden. Insbesondere sind ferner Daten über eine Intensität des reflektierten Lichts für jedes Pixel umfasst. Dies erlaubt weitere Gewichtungen und andere Weisen der Bestimmung des Mittelpunktes 33 des Flächenkreises 38.

Die Position des Mittelpunktes 33 des Flächenkreises 38 wird bei dem Ausführungsbeispiel an die Trajektorienberechnungseinheit 10 übertragen und dort gespeichert, insbesondere mit dem Aufnahmezeitpunkt des zugehörigen Einzelbildes. Das Verfahren wird auf eine Folge von aufeinander zeitlich folgenden Einzelbildern angewandt. Es kann daher eine Vielzahl früherer Referenzpunkte 39 als Positionen bereitgestellt werden, bei denen das Einzelbildobjekt 31 jeweils detektiert wurde. Diesen früheren Referenzpunkten 39 kann jeweils der Aufnahmezeitpunkt des zugehörigen Einzelbildes zugeordnet werden. Das heißt, die Position des Mittelpunkts 33 des Flächenkreises 38 für in den Einzelbildern erkannten die Einzelbildobjekte 31 kann in Abhängigkeit von der Zeit verfolgt werden. Es wird eine Trajektorie 40 ermittelt, welche den Verlauf der Positionen der Mittelpunkte 33, 39 angibt. Auf diese Weise kann insbesondere eine Bewegung eines Eingabeobjekts, das in den Einzelbildern als Einzelbildobjekt 31 abgebildet wird, verfolgt werden. Die Erzeugung der Trajektorie 40 kann ferner auf andere Weise erfolgen.

In einem weiteren Schritt wird durch die Profilberechnungseinheit 6 ein Abstandsprofil bestimmt, wobei die Umrisslinie des Einzelbildobjekts mittels Polarkoordinaten mit Ursprung im Mittelpunkt des Flächenkreises parametrisiert wird. Dazu kann beispielsweise ein Zeiger definiert werden, der seinen Ursprung im Mittelpunkt des Flächenkreises hat und bis zur Umrisslinie des Einzelbildobjekts reicht. Das Abstandsprofil gibt die Länge dieses Zeigers in Abhängigkeit von einem Winkel an, welchen der Zeiger mit einer senkrecht nach oben weisenden, durch den Mittelpunkt verlaufende Linie einschließt. Zum Beispiel wird das Abstandsprofil dabei so erzeugt, dass die Länge des Zeigers über eine vollständige Drehung im Uhrzeigersinn ausgehend von einer senkrecht nach oben weisenden Position aufgetragen wird.

Der Winkel des Zeigers kann dabei beispielsweise im Bogenmaß angegeben und durch den Normierungsfaktor $\frac{1}{2\pi}$ auf 1 normiert werden. Ferner kann eine Normierung des Abstandsprofils anhand des Radius $r$ des Flächenkreises, das heißt mittels des Normierungsfaktors $\frac{1}{r}$ erfolgen, sodass die Werte des Abstandsprofil um einen normierten Wert von 1 schwanken.

Optional kann der Normierungsfaktor für die Einzelbilder gespeichert und als Funktion der Zeit analysiert werden. Analog zu der Trajektorie 40, bei welcher der Mittelpunkt 33 des Flächenkreises 38 als Funktion der Zeit betrachtet wird, kann die Entwicklung des Normierungsfaktors verwendet werden, um die Veränderung des detektierten Einzelbildobjekts 31 zu charakterisieren.

In weiteren Ausführungsbeispielen kann das Abstandsprofil für äquidistant entlang der Umrisslinie angeordnete Punkte bestimmt werden.

Optional kann eine Vorverarbeitung des Abstandsprofils durchgeführt werden, beispielsweise mittels einer Glättung, um Rauschen zu unterdrücken.

Es werden Merkmale des Abstandsprofils extrahiert, wobei insbesondere Berechnungen nach Art einer Kurvendiskussion durchgeführt werden. Insbesondere wird eine erste und eine zweite Ableitung des Abstandsprofil bestimmt. Bei dem Ausführungsbeispiel ist vorgesehen, dass formbasierte Merkmale extrahiert werden, insbesondere Positionen, Abstände und/oder Amplituden von Extrema des Abstandsprofil sowie die Positionen von Wendepunkten.

Beispielsweise kann bei einer Geste, die mittels einer zumindest teilweise geöffneten und dem Sensor der Erfassungseinheit 4 zugewandten Hand durchgeführt wird, eine Anzahl gestreckter Finger anhand der Anzahl der extrahierten Maxima des Abstandsprofils ermittelt werden. Dabei können weitere Verfahren verwendet werden, beispielsweise um Fehldetektionen zu vermeiden, indem Schwellenwerte für eine minimale oder maximale Amplitude eines Extremwerts oder für eine bestimmte Breite des Kurvenverlaufs in einer Umgebung des Extremums berücksichtigt werden.

In weiteren Ausführungsbeispielen können alternativ oder zusätzlich weitere Merkmale extrahiert werden.

Bei dem Ausführungsbeispiel ist vorgesehen, dass eine Kontinuitätsprüfung durchgeführt wird, bei der zusammengehörige Einzelbildobjekte aufeinanderfolgender Einzelbilder erkannt werden. Dies erfolgt, um sicherzustellen, dass die Trajektorie 40 sich auf die Bewegung eines bestimmten Eingabeobjekts bezieht und sich nicht sprunghaft verändert. Hierzu können unterschiedliche Verfahren angewandt werden, insbesondere wird überprüft, ob sprungartige, nicht plausible Bewegungen im Verlauf der Trajektorie 40 zu beobachten sind. Ferner kann überprüft werden, ob plötzliche Größenänderungen des detektierten Einzelbildobjekts 31 auftreten und auf Fehldetektionen hinweisen.

Da Daten einer Folge von Einzelbildern vorliegen, kann auch die Trajektorie nach Art einer Kurvendiskussion analysiert und für die Gestenerkennung verwendet werden. Ferner können Änderungen der aus den Einzelbildern extrahierten Merkmale erkannt und berücksichtigt werden. Insbesondere werden dabei Trajektorienmerkmale extrahiert, beispielsweise eine Richtung oder die Lage und Größe von Extrema für einen Abstand, eine Geschwindigkeit und Beschleunigung sowie der Verlauf der Trajektorie zwischen den Extrema.

In einem weiteren Schritt 25 wird bei dem Ausführungsbeispiel unterschieden, ob eine Erkennung einer Geste durchgeführt werden soll oder ob das System trainiert werden soll, etwa um eine Geste neu zu lernen oder die Erkennung einer bekannten Geste zu verbessern.

Wenn eine Geste erkannt werden soll, wird in einem Schritt 26 durch die Zuordnungseinheit 7 eine Klassifizierung durchgeführt. Dies kann als Ablauf des Verfahrens in einem "*online*-Modus" bezeichnet werden, bei dem eine Geste erkannt und ein entsprechendes Ausgabesignal erzeugt und ausgegeben werden soll. Dabei wird bei dem Ausführungsbeispiel anhand des zuvor bestimmten Abstandsprofils, der Trajektorie und/oder der extrahierten Trajektorienbeziehungsweise Profilmerkmale eine zugeordnete Geste bestimmt. Dabei können bestimmte Merkmalen bestimmten Gesten zugeordnet sein, beispielsweise eine bestimmte Anzahl von Maxima des Abstandsprofils oder eine Richtung der Trajektorie. In diesem Fall kann unterschieden werden, ob ein oder mehrere Finger gestreckt sind und allein die Anzahl der gestreckten Finger kann die Zuordnung einer Geste erlauben.

Zudem können zeitliche Veränderungen der für die Einzelbilder der Bilddaten bestimmten Merkmale berücksichtigt werden. Beispielsweise kann die Trajektorie 40 ausgewertet werden und es kann zum Beispiel eine Bewegungsrichtung, eine Geschwindigkeit und/oder eine Beschleunigung als Merkmal bestimmt werden. Dies kann beispielsweise eine Wisch- oder Schiebegeste charakterisieren, die eine Bewegung von einer Seite zu einer anderen Seite umfasst. Ferner kann bei einer dreidimensionalen Erfassung der Trajektorie eine Bewegung zum Sensor hin oder von diesem weg detektiert werden, insbesondere in Verbindung mit Schiebe- oder Ziehgesten.

Optional kann ferner eine Veränderung des Normierungsfaktors, wie oben erläutert, als Merkmal extrahiert und bei der Klassifizierung berücksichtigt werden.

Die Klassifizierung kann gegebenenfalls mehrstufig erfolgen, beispielsweise indem zunächst eine Klassifizierung anhand bestimmter Merkmale durchgeführt und anschließend anhand weiterer Merkmale verfeinert wird.

Zudem kann die Klassifizierung auf mehreren Ebenen erfolgen, wobei einerseits in den Einzelbildern erkannte Gesten (hier auch als Teilgesten betrachtet) und andererseits veränderliche Parameter der Gesten der detektierten Folge von Einzelbildern berücksichtigt werden.

Es kann ein Profilvergleich durchgeführt werden, wobei Referenzprofile verwendet werden, die bei dem Ausführungsbeispiel von der Speichereinheit 9 bereitgestellt werden. Der Profilvergleich kann auf unterschiedliche Weisen erfolgen.

Beispielsweise kann für die Referenzprofile und/oder die Referenz-Trajektorien eine Vorverarbeitung durchgeführt werden, insbesondere analog zu der Extraktion von Merkmalen des Abstandsprofils und der Trajektorie im Schritt 24. Das Ergebnis einer solchen Vorverarbeitung für die Referenzprofile kann bereits vor Ausführung des Verfahrens erfolgen und die resultierenden Profilmerkmale können gespeichert und bereitgestellt werden. Der Profilvergleich kann dann vergleichsweise einfach durchgeführt werden, indem etwa die Anzahl der Extrema, ihre Form und Lage, gegebenenfalls zueinander, und/oder der Kurvenverlauf zwischen den Extrema, etwa anhand der Parameter der Wendepunkte, berücksichtigt werden. Zudem können die Referenzprofile Veränderungen über die Zeit aufweisen, etwa eine Bewegung in eine bestimmte Richtung und mit einer bestimmten Geschwindigkeit und/oder Beschleunigung. Auch hierbei kann die Vorverarbeitung so erfolgen, dass geeignete Merkmale bereits im Voraus extrahiert und für den Profilvergleich bereitgestellt werden können.

Zur Erkennung des Einzelbildobjekts und insbesondere zur Zuordnung der Geste zu dem Einzelbildobjekt werden zur Laufzeit eines Programms zur Ausführung des Verfahrens beispielsweise für ein in einem Einzelbild erkanntes Einzelbildobjekt Repräsentationen für bestimmte Gesten durchlaufen und mit dem bestimmten Abstandsprofil verglichen. Die Repräsentationen sind insbesondere in einem Mikrocontroller gespeichert und können auf diese Weise besonders schnell zur Laufzeit durchlaufen und ausgewertet werden. Die Repräsentationen können Merkmale aus einem Trainingslauf umfassen, bei dem ein Training für die erkennbaren Gesten durchgeführt wird. Wird bei einem solchen Durchlaufen eine Geste erkannt, kann dieses Ergebnis an ein übergeordnetes System gemeldet beziehungsweise ein Ausgabesignal erzeugt und ausgegeben werden.

In einer aufwändigeren Ausführung kann der Profilvergleich anhand eines Maschinenlernverfahrens durchgeführt werden, insbesondere mittels eines neuronalen Netzes. Dies erfordert typischerweise eine höhere Rechenleistung, kann jedoch insbesondere zur Erkennung von Gesten anhand komplexerer Abstandsprofile und/oder Trajektorien genutzt werden. Zum Profilvergleich wird hier beispielsweise die Trajektorie, das gesamte Abstandsprofil und gegebenenfalls entsprechende Daten von Referenzprofilen verwendet. Insbesondere werden hier für den Profilvergleich nicht nur einzelne extrahierte Profilmerkmale berücksichtigt.

In weiteren Ausführungsbeispielen kann der Trajektorien- und Profilvergleich auf andere Weise erfolgen, wobei dem Abstandsprofil ein Referenzprofil oder eine Gruppe von Referenzprofilen zugeordnet wird beziehungsweise der Trajektorie eine Referenz-Trajektorie oder eine Gruppe von Referenz-Trajektorien. Die Referenzprofile beziehungsweise Referenz-Trajektorien sind insbesondere jeweils einer Geste zugeordnet.

Nachdem anhand der erfassten Bilddaten eine Geste bestimmt wurde, wird in einem weiteren Schritt 27 eine Nachbearbeitung durchgeführt, wobei durch die Ausgabeeinheit 8 ein Ausgabesignal erzeugt und ausgegeben wird. Bei dem Ausführungsbeispiel ist vorgesehen, dass das Ausgabesignal ein Steuersignal für die Einrichtung 3, in diesem Fall das Radio 3, umfasst und an dieses übertragen wird, wobei keine für einen menschlichen Nutzer erfassbare Ausgabe erfolgt. Die Gestensteuerung des Radios 3 erfolgt auf an sich bekannte Weise, wobei beispielsweise ein Radiosender eingestellt werden kann, wenn eine Geste mit einer bestimmten Anzahl von Fingern erkannt wird oder es kann durch Wischen in eine Richtung zu einem anderen Sender umgeschaltet werden. In weiteren Ausführungsbeispielen kann die Ausgabe für den Nutzer erfassbar ausgegeben werden, etwa mittels einer visuell wahrnehmbaren Anzeige.

In weiteren Ausführungsbeispielen können andere Einrichtungen 3 mittels einer Gestensteuerung gesteuert werden, wobei anhand der Geste eine Eingabe erfasst wird.

Wird in dem Entscheidungsschritt 25 erkannt, dass ein Training der Gestenerkennung durchgeführt werden soll, wird in einem Schritt 28 ein Modelltraining durchgeführt und in einem weiteren Schritt 29 ein Modell generiert. Dies kann durch die Speichereinheit 9 nichtflüchtig gespeichert und kann für spätere Durchläufe bereitgestellt werden. Der Ablauf des Trainings kann als "*offline*-Modus", das heißt ohne das Erzeugen eines Ausgabesignals, durchgeführt werden. Das dabei neu generierte Modell ist gegenüber einem älteren Modell verändert, etwa um eine bekannte Geste besser zu erkennen, oder es kann ein neues Modell erzeugt werden, etwa für eine neu zu lernende Geste. Ein Modell kann insbesondere Referenzprofile, Referenz-Trajektorien oder vergleichbare Daten umfassen, welche zur Erkennung einer Geste anhand eines Abstandsprofil und/oder einer Trajektorie verwendet werden können. Optional kann anschließend eine Klassifizierung zur Erkennung eine Geste sowie eine Erzeugung und Ausgabe eines Ausgabesignals erfolgen.

In einem weiteren Ausführungsbeispiel kann dabei ein Klassifikator eines neuronalen Netzes trainiert oder ein anderes Maschinenlernverfahren durchgeführt werden.

Die oben erläuterten Verfahren im *online*- beziehungsweise *offline*-Modus können einzeln oder nacheinander ausgeführt werden, wobei insbesondere zu berücksichtigen ist, dass die Erkennungssicherheit für eine Geste typischerweise durch vermehrtes Training verbessert werden kann.

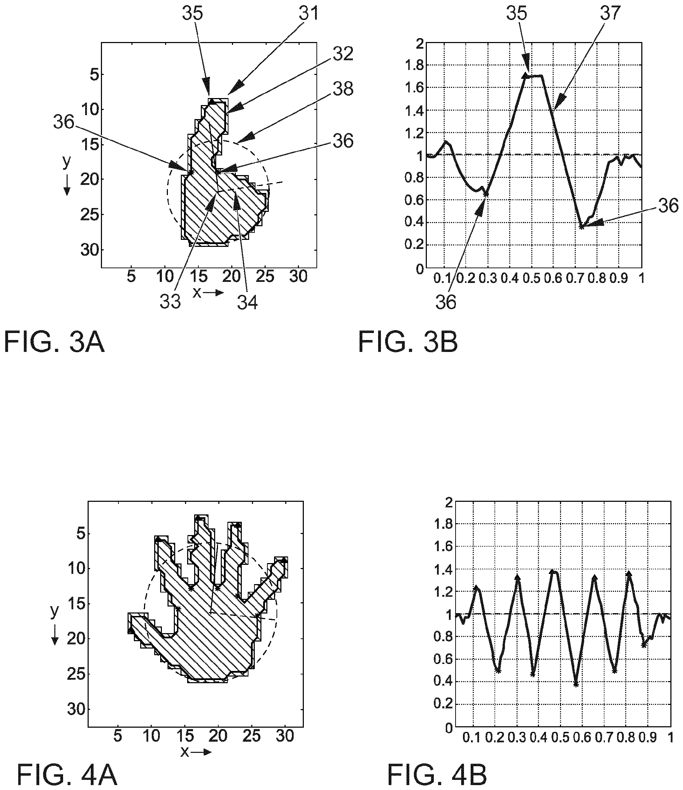

Mit Bezug zu den Figuren 3A bis 8B werden Ausführungsbeispiele von Einzelbildobjekten und dazugehörigen Abstandsprofilen erläutert, wie sie bei dem erfindungsgemäßen Verfahren in Einzelbildern der Bilddaten auftreten können. Dabei wird insbesondere von dem oben mit Bezug zu Figur 1 beschriebenen Ausführungsbeispiel der erfindungsgemäßen Vorrichtung sowie von dem oben mit Bezug zu den Figuren 2A bis 2C beschriebenen Ausführungsbeispiel des erfindungsgemäßen Verfahrens ausgegangen. Die beschriebenen Ausführungsbeispiele beziehen sich auf statische Gesten, die innerhalb von Einzelbildern detektiert werden. Wie oben erläutert, wird erfindungsgemäß ferner eine Trajektorie 40 bestimmt und bei der Erkennung der Gesten berücksichtigt.

Das jeweils in den Figuren 3A, 4A, 5A, 6A, 7A und 8A gezeigte Bild entspricht einer durch die Erfassungseinheit 4 erfassten Abbildung eines Eingabeobjekts nach einem Segmentierungsschritt, indem ein Einzelbildobjekt 31 identifiziert wurde. Für jeden Bildpunkt kann etwa eine von dem Eingabeobjekt reflektierte Intensität und/oder ein Abstandswert erfasst werden. Die Graphen in den Figuren 3B, 4B, 5B, 6B, 7B und 8B zeigen jeweils zumindest teilweise das jeweilige Abstandsprofil 37, welches bei dem Beispiel in einem Trainingslauf, das heißt in einem *offline*-Modus des erfindungsgemäßen Verfahrens, gewonnen wurde. Die anhand der in den Bilddaten erkannten Einzelbildobjekte 31 erfassten Merkmale können vollständig, beispielsweise als Bilddaten, oder in einer komprimierten Form gespeichert werden, etwa indem die Profilmerkmale extrahiert und gespeichert werden.

Bei dem in Figur 3A gezeigten Beispiel wurde ein Einzelbildobjekt 31 innerhalb eines Einzelbildes der Bilddaten erkannt, das beispielsweise einer Hand mit einem gestreckten Finger entspricht. Für das Einzelbildobjekt 31 wurde eine Umrisslinie 32 erzeugt, die einer geschlossenen Linie durch die jeweiligen Mittelpunkte der Pixel des Einzelbildobjekts 31 entspricht. Es wurde ferner ein Flächenkreis 38 bestimmt, dessen Mittelpunkt 33 mit dem Schwerpunkt des Einzelbildobjekts 31 zusammenfällt und dessen Radius 34 so gewählt wurde, dass die Fläche des Flächenkreises 38 mit der Fläche des Einzelbildobjekts 31 übereinstimmt.

Die Umrisslinie 32 des Einzelbildobjekts 31 wird zur Erzeugung eines Abstandsprofil 37 parametrisiert. Dazu wird für Punkte entlang der Umrisslinie 32 ein Abstand zum Mittelpunkt 33 des Flächenkreises 38 bestimmt und anhand des Radius 34 des Flächenkreises 38 normiert. Das heißt, die Schnittpunkte des Umrisses 32 mit dem Flächenkreises 38 haben jeweils einen Abstand von 1. Das Abstandsprofil 37 gibt den normierten Abstand der Punkte auf der Umrisslinie 32 in Abhängigkeit von ihrer Position auf der Umrisslinie 32 an, wobei die Position als Abstand entlang der Umrisslinie 32 berechnet wird, beginnend bei einem beliebigen Punkt auf der Umrisslinie 32.

In weiteren Ausführungsbeispielen kann das Abstandsprofil 37 den normierten Abstand in Abhängigkeit von einem Winkel angeben, welchen die Verbindungslinie zwischen dem Mittelpunkt 33 und dem Punkt auf der Umrisslinie 32 beispielsweise mit einer senkrechten Linie einschließt.

Das Abstandsprofil 37 des in Figur 3A gezeigten Einzelbildobjekts 31 ist in Figur 3B gezeigt. Entlang der x-Achse ist ein Ausschnitt des Abstandes entlang der Umrisslinie 32 gezeigt, normiert auf Werte zwischen 0 und 2. Der zu betrachtende Ausschnitt kann dabei auf an sich bekannte Weise bestimmt werden. Der Ausschnitt umfasst die in Figur 3A gezeigten Extrema, nämlich 2 Minima 36 (gezeigt als Sternchen) und ein Maximum 35 (gezeigt als Dreieck). Die Bestimmung der Extrema 35, 36 erfolgt auf an sich bekannte Weise, insbesondere mittels der ersten und zweiten Ableitung des Abstandsprofils 37 sowie gegebenenfalls einer Glättung. Ferner können Schwellenwerte berücksichtigt werden, beispielsweise indem ein Maximum 35 erst beim Überschreiten eines unteren Schwellenwerts und ein Minimum 36 erst bei Unterschreiten eines oberen Schwellenwerts erkannt wird.

Bei dem in den Figuren 3A und 3B gezeigten Beispiel kann etwa anhand des Abstandsprofils 37 ein Maximum 35 identifiziert werden, welches einem gestreckten Finger entspricht. Das heißt, eine solche Geste kann anhand des Abstandsprofils 37 bereits erkannt werden.

Bei weiteren Ausführungsbeispielen ist vorgesehen, dass das Abstandsprofil 37 mit einem oder mehreren Referenzprofilen verglichen wird. Bei diesem Profilvergleich können die Kurvenverläufe verglichen werden und/oder es können Profilmerkmale extrahiert und verglichen werden, um beispielsweise zu überprüfen, ob das gemessene Abstandsprofil 37 die gleiche Anzahl Maxima 35 aufweist wie ein Referenzprofil. Bei weiteren Ausführungsbeispielen kann zur Durchführung des Profilvergleichs ein neuronales Netz oder ein anderes Verfahren verwendet werden.

Anhand der bei diesem Beispiel in einem *offline*-Modus erfassten Daten kann ein Modell generiert werden, beispielsweise um eine neue Geste zu lernen, indem die extrahierten Merkmale 35, 36 in einem Modell gespeichert hinterlegt werden und später als Referenzprofil abrufbar sind. Ferner kann ein Modell, das heißt insbesondere ein oder mehrere Referenzprofile, die der hier erkannten Geste zugeordnet sind, aktualisiert und gespeichert werden.

Bei dem in den Figuren 4A und 4B gezeigten Beispiel wurden Bilddaten einer geöffneten Hand mit fünf Fingern erfasst. Auf die oben beschriebene Weise wurde ein Abstandsprofil 37 bestimmt, das in Figur 4B gezeigt ist. Anhand des Abstandsprofils 37 können fünf Maxima 35 (gezeigt als Dreieck) identifiziert werden, was bei dem Beispiel der Anzahl der gestreckten Finger entspricht.

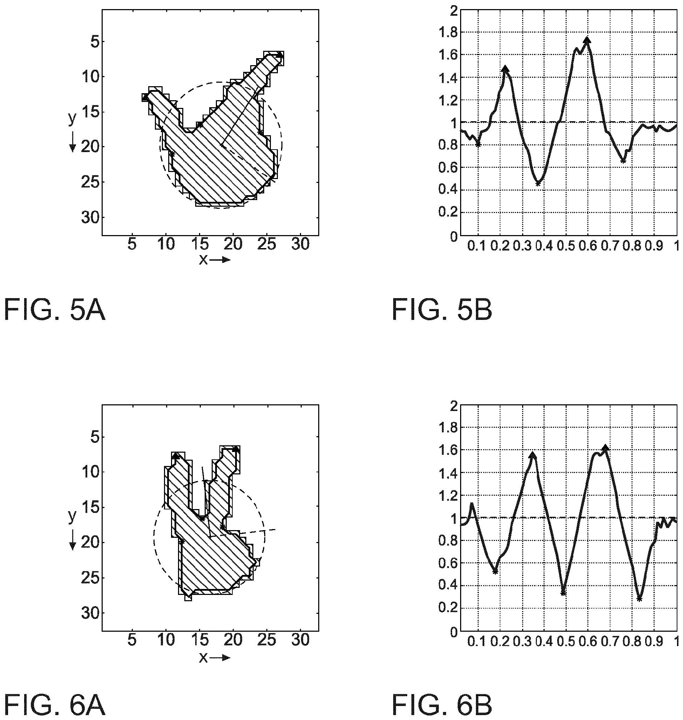

Bei dem in den Figuren 5A und 5B gezeigten Beispiel wurden Bilddaten einer Hand mit zwei gestreckten Fingern, etwa Daumen und Zeigefinger, erfasst. Auf die oben beschriebene Weise wurde ein Abstandsprofil bestimmt, das in Figur 5B gezeigt ist und in dem zwei Maxima 35 (gezeigt als Dreieck) identifiziert werden. Dies entspricht bei dem Beispiel der Anzahl der gestreckten Finger. Ferner kann der Kurvenverlauf analysiert und zum Beispiel der Abstand der den gestreckten Fingern zugeordneten Maxima 35 ausgewertet werden. Die erkannte Geste kann beispielsweise als Zoom-Geste interpretiert werden, insbesondere wenn eine Änderung des Abstandes über die erfasste Bildfolge hinweg erkannt wird.

Bei dem in den Figuren 6A und 6B gezeigten Beispiel wurden - ähnlich wie bei dem in den Figuren 5A und 5B gezeigten Beispiel - Bilddaten einer Hand mit zwei gestreckten Fingern, etwa Zeige- und Mittelfinger, erfasst. Auf die oben beschriebene Weise wurde ein Abstandsprofil bestimmt, das in Figur 6B gezeigt ist und in dem zwei Maxima 35 (gezeigt als Dreieck) identifiziert werden. Dies entspricht bei dem Beispiel der Anzahl der gestreckten Finger. Zur Unterscheidung dieser Geste von der oben mit Bezug zu den Figuren 5A und 5B gezeigten Geste können beispielsweise die erste und die zweite Ableitung der Abstandsprofile berücksichtigt werden. Das heißt, der Verlauf des Anstiegs und die Amplitudenhöhe gehen in ein der jeweiligen Geste zugeordnetes Modell ein. Beispielsweise kann in dem gezeigten Fall festgestellt werden, wie weit die beiden Maxima 35 voneinander entfernt sind und/oder wie steil das Abstandsprofil 37 zwischen den Maxima 35 verläuft.

Bei weiteren Ausführungsbeispielen kann zur Erkennung einer Geste anhand des Abstandsprofils 37 ein neuronales Netz oder ein vergleichbares Verfahren verwendet werden. Eine solche Erkennung ist typischerweise wesentlich aufwendiger als die beschriebene Erkennung mittels einzelner Profilparameter, die einfach anhand von Mitteln der Kurvendiskussion bestimmt werden können.

Bei den oben genannten Beispielen wurden Hände als Eingabeobjekte betrachtet. In weiteren Ausführungsbeispielen können noch andere Gegenstände und Eingabeobjekte, etwa ein Fuß, Kopf oder ein Alltagsgegenstand zur Erfassung von Gesten verwendet werden. Hierzu können Modelle, insbesondere mit Referenzprofilen, erzeugt und gespeichert werden. Insbesondere wenn bei verschiedenen Gesten die gleiche Anzahl von Extrema 35, 36 beziehungsweise Wendepunkte der jeweiligen Abstandsprofile auftreten, können die Ableitungen der Abstandsprofile 37 und ihre jeweiligen Merkmale zur Erkennung einer Geste verwendet werden. Bei dem Verfahren gemäß der Erfindung werden dabei im Verhältnis zu anderen Techniken sehr kleine Speichergrößen verwendet, beispielsweise unter 50 Byte pro Einzelbildobjekt, und es kann eine besonders schnelle Verarbeitung gewährleistet werden, beispielsweise mittels eines Mikrocontroller mit geringer Rechenleistung unter 1 Mips (*million instructions per second*).

Anhand der Abstandsprofile 37 können alternativ oder zusätzlich verschiedene weitere Profilmerkmale extrahiert werden, beispielsweise eine Exzentrizität, eine Rundheit, ein Ausschlag einer Amplitude, eine Neigung im Raum und/oder Wiederholungen der Kurve, beispielsweise die Erkennung einer Periodizität.

Bei den beschriebenen Ausführungsbeispielen des erfindungsgemäßen Verfahrens wird ferner durch die Normierung anhand des Radius 34 des Flächenkreises 38 sichergestellt, dass Gesten mit einer Eingabeobjekten verschiedener Größe, beispielsweise verschiedenen Händen, erkannt werden können.

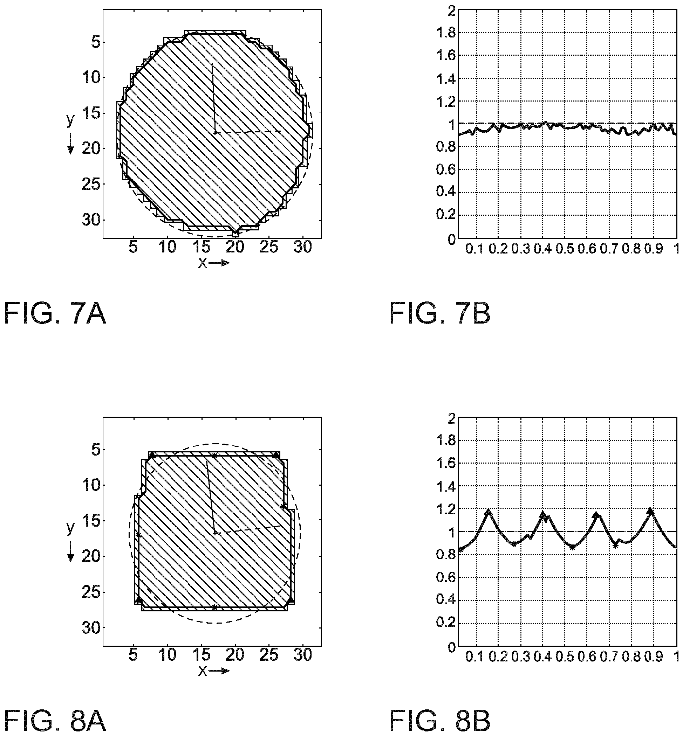

Bei dem in den Figuren 7A und 7B gezeigten Beispiel wurden Bilddaten einer runden Fläche, etwa einer Kugel

EP 3 642 696 B1

oder eines kreisrunden Schildes, erfasst. Auf die oben beschriebene Weise wurde ein Abstandsprofil 37 bestimmt, das in Figur 7B gezeigt ist und einen im Wesentlichen zum Umriss 32 des Flächenkreises 38 parallelen Verlauf zeigt. Insbesondere werden keine Extrema 35, 36 der Kurve detektiert. Anhand einer solchen Linie kann also ein kreisrundes Eingabeobjekt identifiziert werden.

Bei dem in den Figuren 8A und 8B gezeigten Beispiel wurden Bilddaten eines Quaders erfasst. Auf die oben beschriebene Weise wurde ein Abstandsprofil 37 bestimmt, das in Figur 8B gezeigt ist und in regelmäßigen Abständen vier Maxima 35 aufweist, zwischen denen in ebenso regelmäßigen Abständen vier Minima 36 angeordnet sind. Ferner kann etwa anhand der erfassten und gegebenenfalls der zweiten Ableitung bestimmt werden, dass sich der Verlauf des Abstandsprofil zwischen den Maxima 35 im Wesentlichen periodisch wiederholt. Eine solche Linie kann also einem quadratischen Eingabeobjekt zugeordnet werden.

Merkmale wie in den oben mit Bezug zu den Figuren 7A bis 8B erläuterten Fällen können beispielsweise herangezogen werden, um verschiedene Eingabeobjekte zu unterscheiden, etwa eine Hand, einen Fuß und einen Kopf.

Bei weiteren Ausführungsbeispielen werden ferner Bilddaten mittels einer Kamera so erfasst, dass anhand anderer Bildverarbeitungsverfahren, etwa anhand neuronaler Netze, verschiedene Eingabeobjekte erkannt werden können, wobei insbesondere an sich bekannte Bildverarbeitungsverfahren genutzt werden. Dadurch kann beispielsweise ein bestimmtes Eingabeobjekt, etwa eine Hand, erfasst und lokalisiert werden, um die Segmentierung der Bilddaten zu erleichtern und/oder um einen Erfassungsraum zu definieren, in dem das Eingabeobjekt lokalisiert wurde. Die Erkennung einer Geste mittels des erfindungsgemäßen Verfahrens kann dann auf einen bestimmten Bereich der Bilddaten beschränkt und schneller durchgeführt werden.

In weiteren Ausführungsformen können Merkmale berücksichtigt werden, die durch andere Umrisslinien als die äußerste Umrisslinie 32 des bei der Segmentierung erkannten Einzelbildobjekts 31 gebildet werden. Beispielsweise kann das bei der Segmentierung erkannte Einzelbildobjekt 31 ein "Loch" aufweisen, das heißt einen von der Fläche des Einzelbildobjekts 31 umschlossenen Bereich, der selbst nicht zu dem Einzelbildobjekt 31 gehört. Ein solcher Bereich kann beispielsweise bei einer Handgeste wie dem unter Tauchern verbreiteten "OK"-Signal gebildet werden. Ein solcher umschlossener Bereich kann als weiteres Merkmal zur Erkennung eine Geste herangezogen werden. Ferner kann vorgesehen sein, dass eine Parametrisierung des umschlossenen Bereichs erfolgt und dabei ermittelte Parameter ebenso bei der Erkennung der Geste berücksichtigt werden.

Alternativ oder zusätzlich kann die Dauer der Erfassung einer Geste erfasst werden. Die Verarbeitung der Bilddaten erfolgt in diesen Fällen im Wesentlichen wie oben beschrieben, wobei die Bilddaten der jeweiligen Einzelbilder separat analysiert werden können. Alternativ oder zusätzlich können Gesten durch einen Ablauf von Veränderungen der gemessenen Abstandsprofile 37 charakterisiert sein, beispielsweise eine Zoom-Geste, bei welcher der Abstand zweier gestreckter Finger zueinander verändert wird, was anhand wechselnder Abstände der Maxima 35 in den Abstandsprofilen 37 detektiert werden kann. Ferner kann berücksichtigt werden, wenn eine bestimmte Geste für einen bestimmten Zeitraum erfasst wird. Weitere Gesten können alternativ oder zusätzlich auf an sich bekannte Weise vorgesehen sein und erkannt werden.

**Bezugszeichenliste**

| | |
|---|---|
| 1 | Fahrzeug |
| 2 | Steuereinheit |
| 3 | Einrichtung; Radio |
| 4 | Erfassungseinheit; *Time-of-Flight-* (ToF-)Kamera |
| 5 | Segmentierungseinheit |
| 6 | Profilberechnungseinheit |
| 7 | Zuordnungseinheit |
| 8 | Ausgabeeinheit |
| 9 | Speichereinheit |
| 10 | Trajektorienberechnungseinheit |
| 20 | Umrisslinie |
| 21 | Erfassung von Bilddaten |
| 22 | Signalaufbereitung |
| 23 | Segmentierung |
| 24 | Extraktion von Merkmalen |
| 25 | Entscheidung zwischen Trainieren oder Erkennen |
| 26 | Klassifizierung |
| 27 | Nachbearbeitung |

28 Modelltraining
29 Generierung eines Modells
31 Einzelbildobjekt; Hand
32 Umrisslinie
33 Referenzpunkt; Mittelpunkt; geometrischer Schwerpunkt
34 Radius
35 Profilmerkmal; Extremwert; Maximum
36 Profilmerkmal; Extremwert; Minimum
37 Abstandsprofil
38 Flächenkreis
39 Frühere Referenzpunkte
40 Trajektorie

**Patentansprüche**

1. Verfahren zum Erfassen einer Nutzereingabe anhand einer Geste, bei dem Bilddaten mit zumindest zwei Einzelbildern erfasst werden, wobei den Einzelbildern Aufnahmezeitpunkte zugeordnet sind;

anhand der erfassten Einzelbilder jeweils eine Segmentierung durchgeführt wird; wobei für jedes Einzelbild jeweils ein Einzelbildobjekt (31) und anhand des Einzelbildobjekts (31) ein Referenzpunkt (33, 39) bestimmt wird; anhand der Referenzpunkte (33, 39) der Einzelbilder eine Trajektorie (40) bestimmt wird, wobei für jedes Einzelbild jeweils eine Umrisslinie (32) des Einzelbildobjekts (31) bestimmt wird; und
für eine Vielzahl von Punkten auf der Umrisslinie (20) des Einzelbildobjekts (31) jeweils ein Abstand zu dem Referenzpunkt (33, 39) des Einzelbildobjekts (31) bestimmt wird,
wobei
für jedes Einzelbildobjekt (31) anhand der Abstände ein gemessenes Abstandsprofil (37) erzeugt wird;
anhand der Trajektorie (40) eine Geste bestimmt wird; und
die Geste ferner anhand des gemessenen Abstandsprofils (37) und anhand eines Profilvergleichs bestimmt wird, wobei beim Profilvergleich die gemessenen Abstandsprofile (37) mit einer Vielzahl von Referenz-Abstandsprofilen verglichen werden,
wobei
den Referenz-Abstandsprofilen jeweils eine Geste zugeordnet ist
wobei eine erste Ableitung der Abstandsprofile (37) bestimmt wird; und
der Profilvergleich anhand der bestimmten Ableitung erfolgt, und
anhand der bestimmten Geste ein Ausgabesignal erzeugt und ausgegeben wird.

2. Verfahren gemäß Anspruch 1,
**dadurch gekennzeichnet, dass**
der Referenzpunkt (33, 39) der geometrische Schwerpunkt (33, 39) des Einzelbildobjekts (31) ist.

3. Verfahren gemäß einem der vorhergehenden Ansprüche,
**dadurch gekennzeichnet, dass**

mittels einer Kontinuitätsprüfung zusammengehörige Einzelbildobjekte (31) aufeinanderfolgender Einzelbilder erkannt werden; und
die Trajektorie (40) anhand der zusammengehörigen Einzelbildobjekte (31) bestimmt wird.

4. Verfahren gemäß einem der vorhergehenden Ansprüche,
**dadurch gekennzeichnet, dass**

für die Einzelbildobjekte (31) Ausrichtungen bestimmt werden; und
die Geste ferner anhand der Ausrichtungen der Einzelbildobjekte (31) bestimmt wird.

5. Verfahren gemäß einem der vorhergehenden Ansprüche,
**dadurch gekennzeichnet, dass**
die erfassten Bilddaten Bildpunkte umfassen und den Bildpunkten Distanzinformationen zugeordnet sind.

**6.** Verfahren gemäß einem der vorhergehenden Ansprüche,
**dadurch gekennzeichnet, dass**

geometrische Profilmerkmale (35, 36) der gemessenen Abstandsprofile (37) bestimmt werden; und
die Geste anhand der geometrischen Profilmerkmale (35, 36) bestimmt wird.

**7.** Verfahren gemäß einem der vorhergehenden Ansprüche,
**dadurch gekennzeichnet, dass**
für die Referenz-Abstandprofile geometrische Referenzmerkmale bestimmt werden; und der Profilvergleich anhand
der Referenzmerkmale und der Profilmerkmale (35, 36) der gemessenen Abstandsprofile (37) durchgeführt wird.

**8.** Verfahren gemäß Anspruch einem der vorhergehenden Ansprüche,
**dadurch gekennzeichnet, dass**

zumindest zwei Extremwerte (35, 36) der gemessenen Abstandsprofile bestimmt werden; und
der Profilvergleich anhand der bestimmten Extremwerte (35, 36) der gemessenen Abstandsprofile (37) erfolgt.

**9.** Verfahren gemäß einem der vorhergehenden Ansprüche,
**dadurch gekennzeichnet, dass**
der Profilvergleich anhand eines Maschinenlernverfahrens durchgeführt wird.

**10.** Verfahren gemäß einem der vorhergehenden Ansprüche,
**dadurch gekennzeichnet, dass**
bei der Bestimmung der Geste geprüft wird, ob zumindest ein Einzelbildobjekt (31) der Einzelbilder als Hand erkannt
wird.

**11.** Verfahren gemäß einem der vorhergehenden Ansprüche,
**dadurch gekennzeichnet, dass**
die Geste eine Drehung einer Hand umfasst.

**12.** Vorrichtung zum Erfassen einer Nutzereingabe anhand einer Geste, mit einer Erfassungseinheit (4), durch die
Bilddaten mit zumindest zwei Einzelbildern erfasst werden, wobei den Einzelbildern Aufnahmezeitpunkte zugeordnet
sind; einer Segmentierungseinheit (5), durch die anhand der erfassten Einzelbilder jeweils eine Segmentierung
durchgeführt wird, wobei für jedes Einzelbild jeweils ein Einzelbildobjekt (31) und anhand des Einzelbildobjekts (31)
ein Referenzpunkt (33, 39) bestimmt wird, wobei für jedes Einzelbild jeweils eine Umrisslinie (32) des Einzelbildobjekts (31) bestimmt wird; und für eine Vielzahl von Punkten auf der Umrisslinie (20) des Einzelbildobjekts (31) jeweils
ein Abstand zu dem Referenzpunkt (33, 39) des Einzelbildobjekts (31) bestimmt wird, wobei für jedes Einzelbildobjekt
(31) anhand der Abstände ein gemessenes Abstandsprofil (37) erzeugt wird; einer Trajektorienberechnungseinheit
(10), durch die anhand der Referenzpunkte (33, 39) der Einzelbilder eine Trajektorie (40) bestimmt wird und die
Geste ferner anhand des gemessenen Abstandsprofils (37) und anhand eines Profilvergleichs bestimmt wird, wobei
beim Profilvergleich die gemessenen Abstandsprofile (37) mit einer Vielzahl von Referenz-Abstandsprofilen verglichen werden, wobei den Referenz-Abstandsprofilen jeweils eine Geste zugeordnet ist, wobei eine erste Ableitung
der Abstandsprofile (37) bestimmt wird; und der Profilvergleich anhand der bestimmten Ableitung erfolgt, und; einer
Zuordnungseinheit (7), durch die anhand der Trajektorie (40) eine Geste bestimmt wird; und einer Ausgabeeinheit
(8), durch die anhand der bestimmten Geste ein Ausgabesignal erzeugt und ausgegeben wird.

**Claims**

**1.** Method for detecting a user input on the basis of a gesture, in which image data including at least two individual
images are acquired, wherein image-capture times are assigned to the individual images;

segmentation is carried out on the basis of the acquired individual images, wherein a single image object (31)
is determined for each individual image and a reference point (33, 39) is determined on the basis of the individual
image object (31);
a trajectory (40) is determined on the basis of the reference points (33, 39) of the individual images, wherein
an outline (32) of the individual image object (31) is determined for each individual image; and
a distance from the reference point (33, 39) of the individual image object (31) is determined for a large number of points on the outline (20) of the individual image object (31), wherein

a measured distance profile (37) is produced for each individual image object (31) on the basis of the distances;

a gesture is determined on the basis of the trajectory (40); and

the gesture is further determined on the basis of the measured distance profile (37) and on the basis of a profile comparison, wherein the measured distance profiles (37) are compared with a large number of reference distance profiles during profile comparison, wherein

a gesture is assigned to the reference distance profiles in each case,

wherein a first derivative of the distance profiles (37) is determined; and

the profile comparison is carried out on the basis of the determined derivative, and

an output signal is produced and output on the basis of the determined gesture.

2. Method according to claim 1,
**characterized in that**
the reference point (33, 39) is the geometric center (33, 39) of the individual image object (31).

3. Method according to either of the preceding claims,
**characterized in that**

associated individual image objects (31) of successive individual images are identified by means of a continuity check; and
the trajectory (40) is determined on the basis of the associated individual image objects (31).

4. Method according to any of the preceding claims,
**characterized in that**

orientations are determined for the individual image objects (31); and
the gesture is further determined on the basis of the orientations of the individual image objects (31).

5. Method according to any of the preceding claims,
**characterized in that**
the acquired image data comprise image points and distance information is assigned to the image points.

6. Method according to any of the preceding claims,
**characterized in that**

geometric profile features (35, 36) of the measured distance profiles (37) are determined; and
the gesture is determined on the basis of the geometric profile features (35, 36).

7. Method according to any of the preceding claims,
**characterized in that**

geometric reference features are determined for the reference distance profiles; and
the profile comparison is carried out on the basis of the reference features and the profile features (35, 36) of the measured distance profiles (37).

8. Method according to claim any of the preceding claims,
**characterized in that**

at least two extreme values (35, 36) of the measured distance profiles are determined; and
the profile comparison is carried out on the basis of the determined extreme values (35, 36) of the measured distance profiles (37).

9. Method according to any of the preceding claims,
**characterized in that**
the profile comparison is carried out using a machine learning method.

10. Method according to any of the preceding claims,
**characterized in that**

when determining the gesture, it is checked whether at least one individual image object (31) of the individual images is identified as a hand.

11. Method according to any of the preceding claims,
**characterized in that**
the gesture comprises a rotation of a hand.

12. Device for detecting a user input on the basis of a gesture, the device having a detection unit (4) by means of which image data including at least two individual images are acquired, wherein image-capture times are assigned to the individual images;

a segmentation unit (5) by means of which segmentation is carried out on the basis of the acquired individual images, wherein a single image object (31) is determined for each individual image and a reference point (33, 39) is determined on the basis of the individual image object (31), wherein an outline (32) of the individual image object (31) is determined for each individual image; and
a distance from the reference point (33, 39) of the individual image object (31) is determined for a large number of points on the outline (20) of the individual image object (31), wherein
a measured distance profile (37) is produced for each individual image object (31) on the basis of the distances;
a trajectory calculation unit (10) by means of which a trajectory (40) is determined on the basis of the reference points (33, 39) of the individual images, and
the gesture is further determined on the basis of the measured distance profile (37) and on the basis of a profile comparison, wherein the measured distance profiles (37) are compared with a large number of reference distance profiles during profile comparison, wherein
a gesture is assigned to the reference distance profiles in each case,
wherein a first derivative of the distance profiles (37) is determined; and
the profile comparison is carried out on the basis of the determined derivative; and
an assignment unit (7) by means of which a gesture is determined on the basis of the trajectory (40); and
an output unit (8) by means of which an output signal is produced and output on the basis of the determined gesture.

## Revendications

1. Procédé de détection d'une entrée utilisateur à l'aide d'un geste, dans lequel des données d'image comportant au moins deux images individuelles sont détectées, dans lequel des instants d'enregistrement sont attribués aux images individuelles ;

une segmentation est réalisée respectivement à l'aide des images individuelles détectées ; dans lequel pour chaque image individuelle, un objet d'image individuelle (31) est respectivement déterminé et, à l'aide de l'objet d'image individuelle (31), un point de référence (33, 39) est déterminé ;
une trajectoire (40) est déterminée à l'aide du point de référence (33, 39) de l'image individuelle, dans lequel pour chaque image individuelle, respectivement, une ligne de contour (32) de l'objet d'image individuelle (31) est déterminée ; et
pour une pluralité de points sur la ligne de contour (20) de l'objet d'image individuelle (31) respectivement, un espacement par rapport au point de référence (33, 39) de l'objet d'image individuelle (31) est déterminé, dans lequel
pour chaque objet d'image individuelle (31), un profil d'espacement mesuré (37) est généré à l'aide des espacements ;
un geste est déterminé à l'aide de la trajectoire (40) ; et
le geste est en outre déterminé à l'aide du profil d'espacement mesuré (37) et à l'aide d'une comparaison de profil, dans lequel lors de la comparaison de profil, les profils d'espacement mesurés (37) sont comparés à une pluralité de profils d'espacement de référence, dans lequel
un geste est respectivement attribué aux profils d'espacement de référence
dans lequel une première dérivée du profil d'espacement (37) est déterminée ; et
la comparaison de profil est effectuée à l'aide de la dérivée déterminée, et
un signal de sortie est généré à l'aide du geste déterminé et émis.

2. Procédé selon la revendication 1,

**caractérisé en ce que**
le point de référence (33, 39) est le centre de gravité géométrique (33, 39) de l'objet d'image individuelle (31).

3.  Procédé selon l'une quelconque des revendications précédentes,
    **caractérisé en ce que**

    au moyen d'un contrôle de continuité, des objets d'image individuelle (31) associés d'images individuelles successives sont reconnus ; et
    la trajectoire (40) est déterminée à l'aide des objets d'image individuelle (31) associés.

4.  Procédé selon l'une quelconque des revendications précédentes,
    **caractérisé en ce que**

    pour les objets d'image individuelle (31), des alignements sont déterminés ; et
    le geste en outre est déterminé à l'aide des alignements des objets d'image individuelle (31).

5.  Procédé selon l'une quelconque des revendications précédentes,
    **caractérisé en ce que**
    les données d'images comprennent des pixels et des informations de distance sont attribuées aux pixels.

6.  Procédé selon l'une quelconque des revendications précédentes,
    **caractérisé en ce que**

    des caractéristiques de profil géométriques (35, 36) des profils d'espacement mesurés (37) sont déterminées ; et
    le geste est déterminé à l'aide des caractéristiques de profil géométriques (35, 36).

7.  Procédé selon l'une quelconque des revendications précédentes,
    **caractérisé en ce que**

    pour les profils d'espacement de référence, des caractéristiques de référence géométriques sont déterminées ; et
    la comparaison de profil est réalisée à l'aide des caractéristiques de référence et des caractéristiques de profil (35, 36) des profils d'espacement mesurés (37).

8.  Procédé selon l'une quelconque des revendications précédentes,
    **caractérisé en ce que**

    au moins deux valeurs extrêmes (35, 36) des profils d'espacement mesurés sont déterminées ; et
    la comparaison de profil est réalisée à l'aide des valeurs extrêmes (35, 36) déterminées des profils d'espacement mesurés (37).

9.  Procédé selon l'une quelconque des revendications précédentes,
    **caractérisé en ce que**
    la comparaison de profil est réalisée à l'aide d'un procédé d'apprentissage automatique.

10. Procédé selon l'une quelconque des revendications précédentes,
    **caractérisé en ce que**
    lors de la détermination du geste, il est contrôlé si au moins un objet d'image individuelle (31) des images individuelles est reconnu comme étant une main.

11. Procédé selon l'une quelconque des revendications précédentes,
    **caractérisé en ce que**
    le geste comprend une rotation de la main.

12. Dispositif de détection d'une entrée utilisateur à l'aide d'un geste, comportant une unité de détection (4), par le biais de laquelle des données d'image comportant au moins deux images individuelles sont détectées, dans lequel des instants d'enregistrement sont attribués aux images individuelles ;

une unité de segmentation (5), par le biais de laquelle une segmentation est réalisée respectivement à l'aide des images individuelles détectées, dans lequel pour chaque image individuelle, un objet d'image individuelle (31) est respectivement déterminé et, à l'aide de l'objet d'image individuelle (31), un point de référence (33, 39) est déterminé, dans lequel pour chaque image individuelle, une ligne de contour (32) de l'objet d'image individuelle (31) est respectivement déterminée ; et

pour une pluralité de points sur la ligne de contour (20) de l'objet d'image individuelle (31) respectivement, un espacement par rapport au point de référence (33, 39) de l'objet d'image individuelle (31) est déterminé, dans lequel

pour chaque objet d'image individuelle (31), un profil d'espacement mesuré (37) est généré à l'aide des espacements ;

une unité de calcul de trajectoire (10), par le biais de laquelle une trajectoire (40) est déterminée à l'aide des points de référence (33, 39) des images individuelles et

le geste est en outre déterminé à l'aide du profil d'espacement mesuré (37) et à l'aide d'une comparaison de profil, dans lequel lors de la comparaison de profil, les profils d'espacement mesurés (37) sont comparés à une pluralité de profils d'espacement de référence, dans lequel

un geste est respectivement attribué aux profils d'espacement de référence,

dans lequel une première dérivée du profil d'espacement (37) est déterminée ; et

la comparaison de profil est effectuée à l'aide de la dérivée déterminée, et ;

une unité d'attribution (7), par le biais de laquelle un geste est déterminé à l'aide de la trajectoire (40) ; et

une unité de sortie (8) par le biais de laquelle un signal de sortie est généré à l'aide du geste déterminé et émis.

FIG. 1

FIG. 2A

FIG. 2B

FIG. 2C

FIG. 3A

FIG. 3B

FIG. 4A

FIG. 4B

FIG. 5A

FIG. 5B

FIG. 6A

FIG. 6B

FIG. 7A

FIG. 7B

FIG. 8A

FIG. 8B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4438643 A1
- DE 19802261 A1
- DE 102015103022 A1
- DE 602004004048 T2
- WO 2012088702 A1
- WO 2013085525 A1
- US 2014168061 A1
- US 2012068917 A1